# EUROPEAN PATENT SPECIFICATION

(11) **EP 0 898 645 B1**
(45) Date of publication and mention of the grant of the patent: **09.10.2002**
(21) Application number: 97927716.7
(22) Date of filing: 02.05.1997
(51) Int. Cl.: F02C 3/30, F01K 21/04, F02C 7/143

(54) **PROCESS AND APPARATUS FOR ACHIEVING POWER AUGMENTATION IN GAS TURBINES VIA WET COMPRESSION**
METHODE UND EINRICHTUNG UM DIE LEISTUNG VON GASTURBINEN DURCH NÄSSEVERDICHTUNG ZU ERHÖHEN
PROCEDE ET DISPOSITIF PERMETTANT D'ACCROITRE LA PUISSANCE DE TURBINES A GAZ PAR FONCTIONNEMENT EN REGIME HUMIDE

(30) Priority: 14.05.1996 US 645781; 18.09.1996 US 715675
(43) Date of publication of application: 03.03.1999
(60) Divisional application: 01105631.4
(73) Proprietor: THE DOW CHEMICAL COMPANY, Midland, Michigan 48674 (US)
(72) Inventor: ZACHARY, Richard, E., Clinton, LA 70722 (US); HUDSON, Roger, D., Zachary, LA 70791 (US); HENRY, James, E., Denham Springs, LA 70726 (US); LIVELY, William, E., Plaquemine, LA 70764 (US)
(74) Representative: Burford, Anthony Frederick
(86) International application number: PCT/US97/08757
(87) International publication number: WO 97/043530

(56) References cited:
- BE-A- 525 244
- CH-A- 248 309
- CH-A- 250 738
- CH-A- 457 039
- CH-A- 516 735
- DE-A- 2 549 790
- DE-A- 2 931 178
- FR-A- 1 082 598
- GB-A- 2 280 224
- US-A- 4 418 527
- US-A- 5 011 540
- US-A- 5 463 873
- PATENT ABSTRACTS OF JAPAN vol. 017, no. 633 (M-1513), 24 November 1993 & JP 05 195809 A (TOHOKU ELECTRIC POWER CO INC), 3 August 1993,
- PATENT ABSTRACTS OF JAPAN vol. 013, no. 041 (M-791), 30 January 1989 & JP 63 248931 A (HITACHI LTD), 17 October 1988,
- "EXPENDABLE ENGINE TESTED FOR ARMY MISSILES" AVIATION WEEK AND SPACE TECHNOLOGY, vol. 139, no. 10, 6 September 1993, page 26 XP000397329

## Description

The present invention relates broadly to processes and apparatus for augmenting the power production of gas turbines, and more particularly to processes and apparatus for effectively augmenting the power production of land-based, industrial gas turbines commonly used in power generation facilities and chemical processing facilities.

Gas turbines are used in a variety of useful applications. Aviation, shipping, power generation, and chemical processing have all benefited from gas turbines of various designs. Land-based gas turbine power generation facilities can also provide combined cycle benefits when a heat recovery unit is used to generate steam from exhaust gas generated by the gas turbine and a steam turbine is operated by that steam.

In regard to general terminology, the term "gas turbine" traditionally has referred to any turbine system having a compression section, combustion section, and turbine section. In recent years, the term "combustion turbine" has become more used to reference the same machine. In this regard, this specification will use the term "gas turbine" to represent both the traditionally used term and the term "combustion turbine" as some would reference it at the present time.

Gas turbines have a compressor section for compressing inlet air, a combustion section for combining the compressed inlet air with fuel and oxidizing that fuel, and a turbine section where the energy from the hot, pressurized gas produced by the oxidation of the fuel is converted into work. Usually, natural gas (mostly methane), kerosene, or synthetic gas (such as carbon monoxide) is fed as fuel to the combustion section, but other fuels could be used. The rotor, defined by a rotor shaft, attached turbine section rotor blades, and attached compressor section rotor blades, mechanically powers the compressor section and, in some cases, a compressor used in a chemical process or an electric generator. The exhaust gas from the turbine section can be used to achieve thrust, it can be a source of heat energy, or, in some cases, it is discarded.

Some turbine sections employ the use of fluid-cooled rotor blades where, for example, pressurized air or steam is passed through internal cooling cavities within the rotor blades used in the turbine section; this enables higher temperature output from the combustion section.

For various reasons, it often becomes desirable to augment the power production from installed, land-based industrial gas turbines in power generation facilities or in chemical processing facilities, and in particular circumstances, to enable such increased power capacity to be accessed on demand or on an as-needed basis. For example, in a power generation context, demands from a utility's customers may be seasonally higher in the summer months in certain locales, to accommodate increased use of, for example, air conditioners and electric fans. In a chemical processing facility including electricity-intensive chemical processes, such as a conventional electrolytic chlor-alkali process, it may be similarly desirable based on the demand for the products of those electricity-intensive processes to be able to augment the power generated from an installed gas turbine or turbines.

One known method for augmenting the power generated from a given gas turbine simply involves increasing the firing temperature of the turbine, but a disadvantage of this method in baseloaded operation especially is that increased firing temperatures tend to increase thermal wear on hot end components and to increase the frequency of maintenance outages. Evaporative cooling of the inlet air to the turbine is another known option and can provide significant benefits in hot, dry environments especially, but the achievable augmentation from evaporative cooling is limited and dependent on the ambient conditions prevailing in the locale. Water injection into a combustor of a turbine, and steam injection into the combustor shell or directly into a combustor are also known, but carry a penalty in terms of fuel efficiency and cost in addition to capital costs and possible added steam generation costs.

With reference now to the present invention, the Inventors have now conceived of and successfully demonstrated a novel and practical means of achieving significant levels of power augmentation in industrial gas turbines, wherein water (or alcohol, or a mixture thereof, but preferably being simply and essentially only water in view of its (water's) high latent heat of vaporization, ready availability and extremely low to negligible cost to the user to acquire and employ the same) can be added to a gas turbine operating under full load to augment the power output capability of a gas turbine above the output achievable with fully humidified air (thus supplementing the benefits achieved by evaporative inlet air cooling, in turbines which have been equipped with the same previously as a first augmentation option, or potentially providing both full evaporative inlet air cooling and an additional measure of augmentation in turbines which have not been so equipped with conventional evaporative inlet cooling means), a process and effect which will be referred to hereafter as "wet compression".

In a first aspect, the present invention provides a process for augmenting the net output of an industrial gas turbine, the gas turbine including an axial-flow multistage compressor having an inlet for acquiring a working fluid comprising air, the process comprising providing to the working fluid acquired by the axial-flow compressor, in a ramped, incremental or otherwise controllably augmented manner of addition, droplets of water or other liquid which possesses a high latent heat of vaporization, to reduce the temperature increase of the working fluid caused by compression and to thereby achieve an increase in the net output of the gas turbine as measured against the net output of the gas turbine under comparable conditions but without said liquid being provided.

Without intending to be limiting of the present invention, it is believed that wet compression enables power augmentation in even fully (one hundred percent) efficient evaporative inlet air cooling-equipped gas turbine systems, in several ways. In part, augmentation is achieved by reducing the work required for compression of the inlet air. This thermodynamic benefit is realized within the compressor of a gas turbine through "latent heat intercooling", where water added to the air inducted into the compressor cools that air, through evaporation, as the air with the added water is being compressed. The added water can be conceptualized as an "evaporative liquid heat sink" in this regard.The wet compression approach thus saves an incremental amount of work (which would have been needed to compress air not containing the added water) and makes the incremental amount of work available to either drive the load attached to the gas turbine (in the case of a single shaft machine) or to increase the compressor speed to provide more mass flow (which can have value in both single shaft and dual shaft machines).

The power augmentation enabled by wet compression is also attributed in part to a small increase in mass flow which is provided by the vaporized added water. A further increment of power augmentation also appears to be attributable to an increase in air flow which has been noted to occur with a first, 10-20 gallon per minute (38 to 76 litres per minute), increment of water in a large land-based industrial gas turbine. It should be noted that additional fuel is required to raise the temperature of the cooled (respective to dry air compression) air/steam mixture discharged from the compressor to the firing temperature of the gas turbine; but the value realized from the wet compression effect is greater than the value of the additional fuel needed, resulting in value added to the operation of the system as a whole.

The potential of compressor water addition for power augmentation appears to have been appreciated by at least some in the art on a theoretical level for some time, though other references have reached different conclusions as to the overall merits of adding water to a gas turbine's compressor and its effects on turbine or compressor efficiency and performance. An early example of water addition to the compressor of a gas turbine is noted by David G. Wilson in "The Design of High-Efficiency Turbomachinery and Gas Turbines" (1984, Massachusetts Institute of Technology), wherein a six stage centrifugal compressor used in a 1903 vintage turbine built by Aegidius Elling injected water between compressor stages.

In the 1940s, an overview of some of the principles behind wet compression was provided in "Water Spray Injection of an Axial Flow Compressor" by I.T. Wetzel and B.H. Jennings (Proceedings of the Midwest Power Conference, Illinois Institute of Technology, April 18-20, 1949, pages 376 to 380). The article indicates that "water... was sprayed into the inlet duct just upstream from the compressor through four Spraying Systems type 1/4 LNN6 nozzles." No actual results using a gas turbine (as opposed to a small scale, steam turbine) were reported by Wetzel and Jennings, however.

Similarly, a 1973 Soviet publication ("Effect of Water Spraying on Operation of the Compressor of a Gas Turbine Engine", L. I. Slobodyanyuk, Energetika, No. 1, 1973, pp. 92-95) describes the effects of spraying 0.08 kg of distilled water (30-40 micrometers droplet size) per kilogram of 'dry air' into the air intake of a compressor, and suggests that the power of a gas turbine engine under these circumstances would be augmented by roughly 35 percent. As with the Wetzel and Jennings article, however, the apparatus which was used in the Soviet example was not a gas turbine, but an idealized compressor in which interstage traps were employed to draw off liquid water and which was driven by a steam turbine. Further, whereas Wetzel and Jennings recognized the mass flow effect mentioned above as a contributing factor in wet compression power augmentation, this effect was not discussed or recognized in the 1973 Soviet article by Slobodyanyuk.

In the development of jet aircraft as distinguished from land-based gas turbines, the injection of alcohol or water/alcohol mixtures has been considered in the context of providing very short-term thrust augmentation (during take-off, for example), as noted in American Society of Mechanical Engineers article 83-GT-230 entitled "Gas Turbine Compressor Interstage Cooling Using Methanol" (ASME, New York, 1983) by J. A. C. Fortin and J. F. Bardon.

DE-A-2931178 relates to a gas turbine energy conversion process and apparatus for implementation of that process, wherein liquids are injected, as vaporization coolants, in front of and/or into the turbine compressor and vaporized in the compressor. The process can be used in an open or dosed gas turbine process. In one exemplified process, the liquid coolant is atomized and mixed with the compressor feed gas by a rotary disk atomizing device in an additional turbulence chamber upstream of the compressor. In the only other exemplified process, the liquid coolant is atomized by ultrasonically prior to mixing with the compressor feed gas.

US-A-5463873 discloses a method and apparatus for evaporatively cooling air feed to a gas turbine engine by injecting water fog into the inlet air in an amount, regulated by a signal representative of the capacity of the inlet air stream to absorb water vapor, which does not permit water droplets to enter the compressor inlet.

In the particular, distinct context of land-based gas turbines, a 1990 ASME publication, "Gas Turbine Performance Improvement Direct Mixing Evaporative Cooling System American Atlas Cogeneration Facility Rifle, Colorado", J. P. Nolan and V. J. Twombly, reports the construction and operation of a direct mixing evaporative cooling system "as an alternative to conventional wetted rigid media systems used for gas turbine power augmentation", on a gas turbine having a baseline capacity of 13.5 megawatts. In this system, a "fogging system" of atomizing devices attached to small diameter (0.5 inch to 1 inch; 1.25 cm - 2.5 cm) nonferrous piping operating at 600 psi (4 MPa) or greater, as conventionally employed in an adjacent greenhouse operation, was constructed at the top of an extended (16 feet (4.9 m) tall) vertical air intake column and designed to spray liquid water upwards into the air flowing downwardly into the intake column. To provide the desired full humidification of the air taken into the compressor (100 percent relative humidity), it was indicated that 7.5 gallons (28 I) per minute would have to be output through the fogging system. This design flow capacity was doubled to allow for drift, pressure fluctuations, leaks and other losses, and the possibility of "overspray" (that is, excess water being supplied over and above full saturation that could enter the compressor) considered with respect to possible compressor fouling, compressor blade corrosion and compressor blade erosion as well as a possible beneficial increase in mass flow associated exclusively with the excess water.

Several trials were reportedly conducted at varying flow rates, over a range of ambient conditions, from July through September of 1989. An average output gain of 9.6 percent was reported over the baseline output of 13.5 megawatts; of this 9.6 percent, 7.4 percent were attributed to the evaporative cooling of the inlet air (from an average ambient air temperature of 87 degrees Fahrenheit (30.5°C) to a 67 degree Fahrenheit (19.5°C) wet bulb temperature), and 2.2 percent attributed to the reported 1.3 percent increase in mass flow through the compressor (said 1.3 percent figure appearing to take into account only the water input to the air). At the same time, however, a gas turbine exhaust temperature drop of approximately 15 degrees Fahrenheit (8°C) was observed, and in response it is reported that the firing temperature was increased so as to achieve the 1,000 degree Fahrenheit (540°C) exhaust temperature limit.

While the Nolan and Twombly article does on its face seem to describe a fine misting system which has the capacity to continuously input liquid water to the compressor of a relatively small gas turbine over and above full humidification of the inlet air stream, on closer analysis of several key points contained in the article, it is far from unambiguously clear that wet compression power augmentation was in fact occurring in the system as reported by Nolan and Twombly, or indeed that wet compression power augmentation could be successfully and would desirably be employed on industrial gas turbines per present invention, particularly with regard to the larger, more recent industrial gas turbines rated at 35 megawatts and higher and/or at the extended higher levels of augmentation sought and enabled by the Inventors, namely from 20 to perhaps as much as 40 percent of the net output of a given turbine employing fully-humidified air (as achieved by a fully (one hundred percent) efficient evaporative inlet air cooling system, for example).

For example, while the Inventors have not quantified the increase in power production that would have been associated in Nolan's gas turbine with a 15 degree Fahrenheit (8° C) upward shift in the control curve (as reported by Nolan and Twombly), in the Inventors' experience with another manufacturer's solid-bladed turbines this increase would have certainly been greater than the 2.2 percent net "increase" in power production attributed by Nolan and Twombly to the increased mass flow through the turbine. Consequently, even though Nolan and Twombly seem not to recognize this effect, one skilled in the operation and maintenance of these gas turbines could very reasonably conclude that the net effect of "overspray" (liquid water input to the compressor) on overall turbine output is negative or at best is of little or no positive effect, and certainly might question whether a level of added output significantly less than the reported 2.2 percent would justify the reported water treatment costs and any possible negative long-term effects and increased maintenance costs that might be foreseen from extended periods of liquid water addition to the compressors of these turbines.

Certainly, even were some form of wet compression enabled and suggested on industrial gas turbines per present invention, there is no recognition of the possibility of deformation of the turbine housing occurring in the implementation of a similar "fogging system" on industrial gas turbines, nor any teaching or suggestion of solutions to this problem or to counteract potential icing effects from wet compression water addition at lower ambient air temperatures, no teaching or suggestion to add water to achieve augmentation levels of 10 percent or more (much less, 20 percent or more) over and above the net output achievable with fully-humidified air (that is, 10 percent or more through "overspray"), nor any teaching or suggestion for example of cleaning processes to address fouling issues found by the Inventors to be peculiarly associated with the implementation of wet compression at significant levels in industrial gas turbines.

Notwithstanding the limited (and arguably doubtful) use of wet compression power augmentation reported in the Nolan article, and indeed as reflected by several cautionary comments in the same article, there are a number of risks to a gas turbine system which are immediately suggested to those skilled in the art, in considering the use per se of water ingestion in the compressor as an alternate means for obtaining power augmentation in an industrial gas turbine, and especially as considered in regards to larger, more recent models of industrial gas turbines which can have baseline capacities of one hundred megawatts and greater.

As noted, one risk is derived from blade erosive effects; another difficulty (especially in large gas turbine systems) relates to localized and non-uniform cooling problems (due to non-uniform distribution of the added water) within the compressor which can distort the physical components of the gas turbine system in such a way as to cause damage from rubbing of the rotor against the inner wall of the housing and associated seals. A further significant element of risk derives from the possibility of thermal shock if the gas turbine has essentially achieved thermodynamic equilibrium under full load and the liquid addition is abruptly terminated.

Another element of risk is due to the possibility that components of the liquid addition system may break away and impact against the relatively delicate moving parts of the gas turbine system. Still another foreseeable element of risk is associated with additional fouling or corrosion of gas turbine components from impurities that may be present in the water added to the compression inlet air, as these impurities are deposited on the gas turbine components as a result of evaporation of the water in which they had been dissolved.

With particular regard to land-based gas turbine power generation facilities and chemical processing facilities, the above risk factors are compounded to an extent by the substantial investment represented by the gas turbines, the consequences of a turbine wreck or outage on other operations and by non-linear, inherent scale-up considerations associated with these types of turbines.

What the Inventors have essentially provided and claimed herein is an approach and system which enables wet compression to be pragmatically implemented, even at high levels and for extended periods of operation, in industrial gas turbine power generation facilities and chemical processing facilities. Such a system enables an immediate benefit to be realized from the existing base of installed gas turbine power generation facilities and chemical processing facilities. Perhaps more importantly, such a system conceivably enables gas turbines to be optimized for wet compression at the design stage, opening new possibilities in power generation.

In a first aspect, the present invention provides a process for augmenting the net output of an industrial gas turbine, the gas turbine including an axial-flow multistage compressor having an inlet for acquiring a working fluid comprising air, the process comprising providing to the working fluid acquired by the axial-flow compressor, in a ramped, incremental or otherwise controllably augmented manner of addition, droplets of water or other liquid which possesses a high latent heat of vaporization, to reduce the temperature increase of the working fluid caused by compression and to thereby achieve an increase in the net output of the gas turbine as measured against the net output of the gas turbine under comparable conditions but without said liquid being provided.

In another aspect, the invention provides a power production apparatus comprising an industrial gas turbine including an axial-flow multistage compressor having an inlet for acquiring a working fluid comprising air, and droplet-addition means for incrementally augmenting by a process of said first aspect the net output of said turbine by providing the liquid droplets to the working fluid acquired by the axial flow compressor over a period of operation, in the form of a plurality of nebulized liquid mass flow increments, said droplet-addition means comprising a first means positioned substantially adjacent the compressor inlet for providing liquid droplets thereof to the working fluid acquired by the axial flow compressor and supplemental means for providing liquid droplets to the working fluid, which supplemental means is positioned a greater distance away from the compressor inlet than the first means. Preferably said droplet addition means is positioned a sufficient distance away from the compressor inlet so that if in operation under load any element of said droplet addition means should break away from the remainder, such element will be gravitationally pulled to a lower surface of an inlet air duct attached to the turbine housing and preceding the compressor inlet before being pulled into contact with any element of the compressor itself.

In a further aspect, the invention provides a power production apparatus comprising an industrial gas turbine including an axial-flow multistage compressor having an inlet for acquiring a working fluid comprising air; evaporative inlet air cooling means for cooling ambient air feed to the compressor inlet and, separate from the evaporative inlet air cooling means, droplet-addition means for incrementally augmenting by a process of said first aspect the net output of said turbine by providing liquid water droplets to the working fluid acquired by the axial flow compressor over a period of operation, in the form of a plurality of nebulized liquid water mass flow increments in an amount to achieve full humidification of the working fluid and a measure of interstage evaporative cooling in one or more stages of the compressor. Preferably, the droplet-addition means is positioned a sufficient distance away from the compressor inlet so that if in operation under load any element of said droplet addition means should break away from the remainder, such element will be gravitationally pulled to a lower surface of an inlet air duct attached to the turbine housing and preceding the compressor inlet before being pulled into contact with any element of the compressor itself.

The present invention provides apparatus and process which achieve an increase in the net output of a gas turbine by feeding liquid water to the inlet of an industrial gas turbine, and in particular, to enable such an increase to be realized in industrial gas turbines through the addition of liquid water to the compressor of the turbine over and above a level of saturation or full humidification of the compressor inlet air. One already-noted effect of this addition is to reduce the temperature increase of the working fluid caused by compression and to thereby increase the net power output available for continuously driving, without limitation, an attached generator or chemical manufacturing compressor above the net power output which would be available at comparable conditions in all other respects. In preferred embodiments, at least a ten percent increase in the net power output of an industrial gas turbine is realized above that attainable with fully-efficient evaporative cooling of the compressor inlet air.

The rate of addition (or removal) of liquid water can be controlled to avoid the above-mentioned, debilitating thermal shocks.

Heat and humidity can be provided to the working fluid to allow continued power augmentation during periods when the temperature of the working fluid would otherwise drop to a level which would allow detrimental ice formation to occur in the inlet of the axial-flow multistage compressor of a gas turbine.

Temperature measurement in the gas turbine compressor inlet can be used to (1) guard against the possibility of icing occurring in the inlet to such a degree that this ice, if broken away, might damage downstream elements of the gas turbine, (2) minimize the use of freezing control materials such as either steam or a freezing point depressant, and/or (3) provide an input to a control system which is used to coordinate, monitor and/or control the overall water addition apparatus and process. It is preferred to provide a viewport near the compressor inlet so that icing can be visually monitored as well.

Provision of a sufficiently uniform distribution of liquid water in the working fluid limits deformation of the housing (casing) to a generally predetermined acceptable limit (as determined, for example, in a retrofit context by the tolerances applicable in a conventional mode of operation) so that damage to the axial-flow multistage compressor of a gas turbine will be prevented. The potential deformation or angular distortion in an industrial gas turbine, which may result from the addition of sufficient water to achieve net increases in the turbine output of 10 percent and greater over that attainable with fully-humidified air, can be measured and controlled so that this damage is prevented.

The risk to the turbine from elements of a water addition apparatus breaking away and being carried with the inlet air toward the compressor inlet of the turbine can be minimized by (a) locating a device for adding such water a sufficient distance away from the inlet of the compressor section whereby, in the event any element of the device does in fact break away and is carried with the inlet air toward the compressor inlet, that element is gravitationally pulled to a lower surface of the inlet duct used to convey air into the gas turbine before entering the compressor inlet, and (b) by providing nebulized water through the device (preferably in a plurality of increments ordered in time and position so as to controllably augment the mass flow of water into the compressor) which, given the separation of the device from the compressor inlet, is sufficiently entrained in the inlet air and carried therewith into the compressor section of the turbine for accomplishing a degree of power augmentation from the turbine.

The temperature profile of fluid-cooled rotor blades in the turbine section can be monitored so that clogging of cooling pathways in those rotor blades, for example, by the influence of impurities in the water added through the apparatus and process, can be detected at the earliest possible time.

An industrial gas turbine employing a power augmentation process of the present invention can be effectively cleaned on-line of accumulation beyond the initial several rows of compressor blades of impurities from the added water.

In this regard, gas turbine compressors are presently periodically cleaned to remove buildups of particulates on internal components. Some of this cleaning can be performed without full shutdown of the gas turbine, and materials such as water, ground pecan hulls, rice or chemical cleaning mixtures can be either sprayed, blown, or otherwise input into the inlet of the gas turbine after the gas turbine has been operationally configured for such a cleaning operation. At least one such chemical mixture is disclosed in US-A-4,808,235 entitled "CLEANING GAS TURBINE COMPRESSORS" issued on February 28, 1989 to Woodson, et al.

Other systems for minimizing buildup of particulates on internal components of gas turbines focus on cleaning of the gas turbine inlet air, as is, for instance, disclosed in US-A-4,926,620 entitled "CLEANING GAS TURBINE INLET AIR" issued on May 22, 1990 to Donle.

Turbines employing the power augmentation of the present invention can be cleaned off-line.

The axial compressor used in the present invention can have an inlet air duct whose flow axis is essentially aligned with the axis of rotation of the gas turbine rotor.

Alternatively, the inlet air duct axis can be essentially perpendicular to the axis of rotation of the gas turbine rotor.

The compressed air of the axial compressor section can be pre-filtered before it is used for cooling turbine section rotor blades, so that waterbome impurity-associated plugging of cooling passages in the turbine section rotor blades is minimized or substantially does not occur.

The present invention can be applied to gas turbine systems which are presently in operation without requiring substantial maintenance, retrofit, or "tear-down" of the gas turbine engine.

The present invention permits full evaporative cooling of the compressor inlet air as well as power augmentation by further water addition, on gas turbines which have not theretofore employed evaporative inlet air cooling means

The process of the invention can be used for six hours or more within a given 24 hour period of time to augment the net output of an industrial gas turbine driving a generator or compressor.

The gas turbine output augmentation of the present invention can be simply accomplished by continuously providing over an extended period of time (that is, extended beyond what would be dictated by on-line wash considerations) at least a conventional compressor water wash amount of liquid water to the compressor inlet of an industrial gas turbine, and especially to the compressor inlet of an industrial gas turbine including separate conventional evaporative inlet air cooling means, for example, chillers or media-type evaporative cooling systems. Where on-line compressor washes are performed currently to restore some of the turbine performance (power output) losses associated with fouling from the compression of normally-humidified air, these are typically limited in duration to from thirty to perhaps ninety minutes, as determined by what is practically recoverable in performance terms from continued washing versus the costs of such continued washing in energy requirements, erosion of the compressor blades, blade coating losses, and so forth.

A compressor water wash amount of water can continued to be added, for example, by an existing on-line compressor wash system or can be initiated apart from an online wash cycle, to augment power production from an industrial gas turbine equipped with such an online compressor wash system responsive to an anticipated or actual increase in demand for the power from the turbine, or to maintain the desired level of power production with a change in ambient air conditions. In contrast, however, to predominantly-used on-line compressor wash systems generating coarse wash sprays for removing deposits on fouled compressor components, preferably in this power augmentation context the water will be supplied predominantly or entirely as a fine mist, with a mean average droplet diameter of preferably 200 micrometers or less.

The mass flow rate of the liquid droplets can be modified with respect to time to moderate thermal stresses within the gas turbine which are related to the providing of liquid water to the working fluid, and, thereafter, liquid water droplets provided to the working fluid acquired by the compressor at a substantially constant mass flow rate to augment the net output of the gas turbine by wet compression.

Heat and humidity can be added to the working fluid to allow continued power augmentation during periods when the temperature of the working fluid would otherwise drop to a level which would allow detrimental ice formation to occur in the inlet.

A sufficiently uniform distribution of liquid water in the working fluid can be ensured to limit angular deformation of the housing to a generally predetermined acceptable limit that prevents damage to the axial-flow multistage compressor.

Angular deformation in the housing which is caused by the providing of liquid water to the working fluid can be monitored.

Additionally, the temperature profile of fluid-cooled rotor blades in the turbine section where the combusted gas exchanges its kinetic energy with the rotor blades can be monitored. The temperature profile of fluid cooled rotor blades is a measurement which helps to identify plugging which may result from minerals or other precipitate solids from the nebulized water in the compressor air stream being used to cool the turbine section rotor blades. The temperature profile is also useful in identifying damage which might occur on the surface of a multilayer turbine section blade from the erosive effects of water carried through the compressor into the turbine section or from precipitate solids in the compressor air stream.

The temperature in the compressor inlet can be monitored to (1) guard against the possibility of icing occurring in the inlet to such a degree that this ice, if broken away, might damage downstream elements of the gas turbine, (2) minimize the use of freezing control materials such as either steam or a freezing point depressant, and/or (3) provide an input to a control system which is used to coordinate, monitor and/or control the overall power augmentation apparatus and process.

On-line cleaning on the compressor of an industrial gas turbine can be achieved by employing a power augmentation process of the present invention of soluble deposits left behind by the evaporation of added water and of other airborne compressor-fouling materials acquired by the compressor through its air intake, which on-line cleaning process comprises (on a periodic or intermittent basis, as cleaning is indicated or desired) one or more of: a) supplementing a plurality of fine mist increments of liquid water which are added for power augmentation purposes with a conventional coarse wash increment, or replacing one or more of the fine mist increments with a corresponding mass flow of water in a conventional coarse wash form; b) intermittently or periodically supplying one or more additional fine mist increments to those provided on a substantially continuous basis for power augmentation purposes; and c) periodically or intermittently controllably removing all increments of water addition to the compressor, and operating for a sufficient length of time without such water addition to volatilize and/or crack fouling deposits. Cyclical performance of these steps is also contemplated, and may be advantageous.

In an alternate, on-line cleaning process which would be generally preferred for use on turbines equipped with throttleable inlet guide vanes (or IGV's), a greater penetration of liquid water into the compressor section is similarly achieved without applying one or more reserved increments of water addition capacity as just described, by periodically or intermittently (as cleaning is indicated to be desirable) throttling the inlet guide vanes of the turbine while on-line and correspondingly reducing the air intake to the compressor. This alternate means of on-line cleaning is advantageous in not implicating additional capital investment as may be associated with reserving one or more "cleaning" increments of liquid water addition, in allowing the continuation generally of a desired mass flow rate of water to the compressor and where, for various reasons, it may not be possible or advisable to exceed the mass flow rate desirably employed for augmentation purposes.

An off-line compressor cleaning process specially adapted for use on an industrial gas turbine employing wet compression power augmentation according to the present invention, comprises initially bringing the turbine off-line at a reduced rotor speed, and cooling the compressor at a second rotor speed in preparation for subsequent introduction of a foamable cleaning composition. Thereafter, in one or more iterations with the soaking and rinsing steps described in the succeeding two sentences, a rotation rate between the first, reduced rotor speed and the second rotor speed is established which is suited for distributing a foamed cleaning composition substantially throughout the length of the turbine's compressor, and a foamed cleaner is formed in or introduced to the compressor. A reduced, soaking rotation rate of 0 revolutions per minute (rpm) and greater (but which is less than the second rotor speed) is then established, and the foamed cleaning composition left in place for a period of time. The rotor speed is increased sufficiently to remove the foam from the compressor, and a liquid water rinse is completed (preferably by means of the water-addition apparatus used in performing wet compression power augmentation on the subject turbine), before restarting the turbine.

A conventional compressor water wash apparatus only (preferably, where employed alone, the compressor wash apparatus will be of a type suited to deliver a fine mist spray characterized by a mean average droplet diameter of preferably 200 micrometers or less), a spray rack group assembly comprised of at least one spray rack water pipe and at least one spray rack water nozzle, or a combination of a conventional compressor water wash apparatus (fine mist or coarse spray) and a spray rack group assembly can be used in the present invention.

A laser emitter and laser target measuring system mounted to the exterior of the housing can be used for detecting deformation in the housing.

An optical pyrometer can be used for monitoring the emitted energy of each of the cooled rotor blades through a sighting tube, and for characterizing the temperature profile of each of the fluid cooled rotor blades.

Temperature sensors can be used to monitor the temperature in the compressor inlet area to (1) guard against the possibility of icing occurring in the inlet to such a degree that this ice, if broken away, might damage downstream elements of the gas turbine or induce stall by starving the compressor, (2) minimize the use of freezing control materials such as either steam or a freezing point depressant, and/or (3) provide an input to a control system which is used to coordinate, monitor and/or control the overall wet compression apparatus and process.

A process control computer executing process control logic can be used to control the mass flow of nebulized water to the compressor inlet so that deformation in the gas turbine housing is minimized.

Additional features and advantages of the present invention will become more fully apparent from a reading of the detailed description of the preferred embodiments of the invention in these various aspects and in view of the accompanying drawings, in which:
Figure 1 shows an overview of a typical gas turbine power generation facility (the affiliated electric generator is not actually shown in Figure 1, but is presumed to be apparent) used to generate electric power from the combustion of fuel with air;
Figures 2A and 2B show details of a gas turbine engine having an axial compressor.
Figure 3 shows the positioning of a spray rack group assembly used in the gas turbine power generation facility of Figure 1 (affiliated steam pipes are also shown);
Figure 3A is an enlarged view of details of the spray rack group assembly and steam pipes;
Figure 4 shows further details for the layout of the spray rack, showing an elevation view of the relative location of individual spray rack water pipes, the positioning of each spray rack water nozzle, and the use of spray rack stiffeners;
Figure 5 is a plan view showing details of the spray rack assembly of Figures 3 and 4 with a steam manifold for feeding steam to the steam pipes;
Figure 6 presents details for monitoring for deformation of the housing of the gas turbine engine system shown, for example, in Figures 1 and 2; and
Figures 7 through 9 graphically depict the results achieved in Example 2 below.

### DEFINITION OF TERMS

"Industrial gas turbine" means at least a 20 megawatt or a larger megawatt turbine used for land-based power generation in industrial and utility power-generating applications. The term industrial gas turbine can include heavy duty as well as aircraft derivative turbines.

"Heavy duty gas turbine" refers to a type of gas turbine which, from a design standpoint, is not specifically designed to accept abrupt changes of significant magnitude in power output. Heavy duty gas turbines are thus intended to distinguish, particularly, aircraft turbines. An aircraft turbine, in contrast to a heavy duty gas turbine, is also designed specifically to ingest large quantities of liquid water in its normal operating environment and operation.

"Working fluid". The typical working fluid of a gas turbine is a gas; the typical working fluid in the compressor of a gas turbine is humidified air. In the present invention the working fluid is expanded to include liquid water which, within the gas turbine thermodynamic cycle, vaporizes to produce gas. The working fluid can change its composition as it progresses through the industrial gas turbine (that is due to injection of materials and from the combustion process). In this regard, the working fluid can, at various positions along the axis of the gas turbine as it progresses through the working cycle of the gas turbine, be either a gas mixture, a two-phase liquid in gas mixture, a two-phase mixture of solid particles in gas, or a three-phase mixture of liquid and solid particles in gas.

"Net output" is in reference to the net output of a gas turbine and means the available shaft power for driving a generator or process compressor (external to the gas turbine). Net output of a gas turbine is measured by torque and speed of the rotor shaft and can be expressed in terms of either horsepower or megawatts. When expressed in terms of megawatts, the term net output generally includes generator losses. When comparing net outputs under comparable conditions, but with and without liquid water provided, the comparable conditions include a comparable process for measuring net output.

"Addition of heat and humidity" references the concurrent addition of heat and moisture to the working fluid up to the saturation point of the working fluid.

"Angular deformation" refers to a condition of bowing or distortion of the housing which can result in interference between the rotor and housing of the turbine.

"Damage" means harmful alteration of any of the components of the gas turbine beyond that which would be anticipated in the course of reasonable use and operation. With wet compression, a certain acceptable degree of erosion of the blade coating or blade material is anticipated.

"Water" means water which, in compositional nature, is useful for ingestion into the gas turbine for purposes of power augmentation by wet compression. It can include impurities and conventional or beneficial additives such as, for example, a freezing point depressant or materials to reduce or remedy any tendency of the water added to corrode turbine components or to leach out components of alloys used in constructing the various structural elements of the gas turbine with which the water may come into contact.

"Varying a number of mass flow increments in a balanced manner" refers to increments of water added to the working fluid. The term "balanced manner" refers to an increment as having been qualified to not cause a distortion of the gas turbine housing which exceeds an acceptable angular distortion limit when the increment is implemented and further that the combined increments cannot produce unacceptable angular distortion in the housing after an increment(s) has either been added to or subtracted from the previous set of combined increments.

"Sufficiently uniform distribution" refers to a distribution of liquid water in the working fluid acquired by the compressor, which will in turn result in a distribution of liquid water within the compressor that will not cause a distortion of the gas turbine housing exceeding an acceptable angular distortion limit.

"Improved fuel efficiency" means the production of more net power output per unit of fuel when liquid water is added to the working fluid than would be achieved under comparable conditions but without said water having been added to the working fluid.

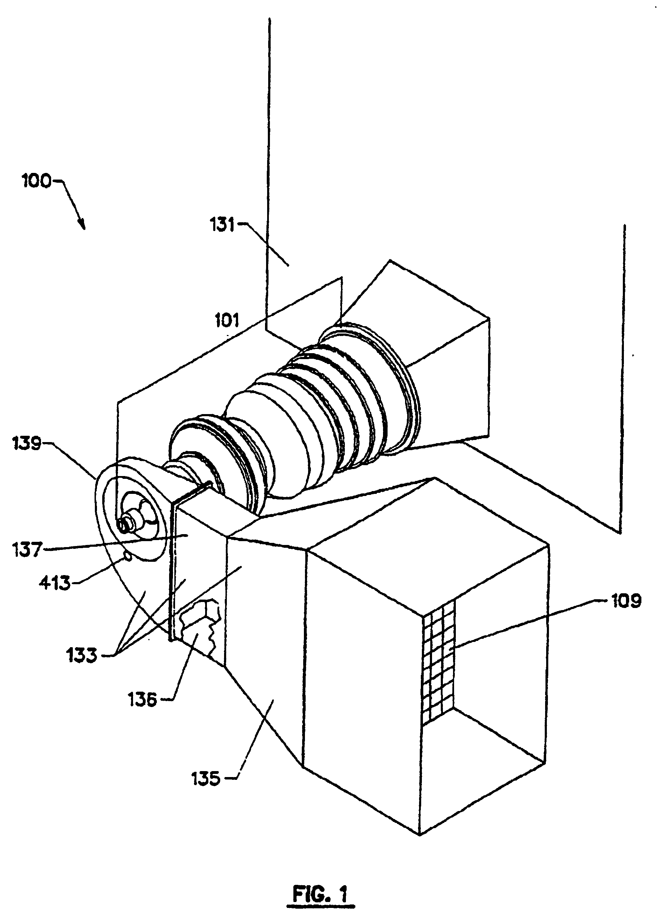

Turning now to Figure 1, an overview is provided of a gas turbine power generation facility 100 used to generate electric power from the combustion of fuel with air and which is exemplary of a facility which may employ the apparatus and process of the present invention (the affiliated electric generator is not actually shown in Figure 1, but is presumed to be apparent). The gas turbine power generation facility 100 comprises a gas turbine or gas turbine engine 101 which includes an axial-flow compressor or axial compressor section 103, the axial compressor section 103 having a compressor inlet 102 for acquiring a working fluid comprising air. It is understood that the gas turbine engine 101 and axial compressor section 103 are illustrative only and that the invention may be practiced on other types of gas turbine engines known to the art. It is also understood that the invention may be beneficially used with a axial compressor section which has, for example, multiple locations for addition of liquid water to the working fluid rather than a single inlet for acquiring liquid water in the working fluid.

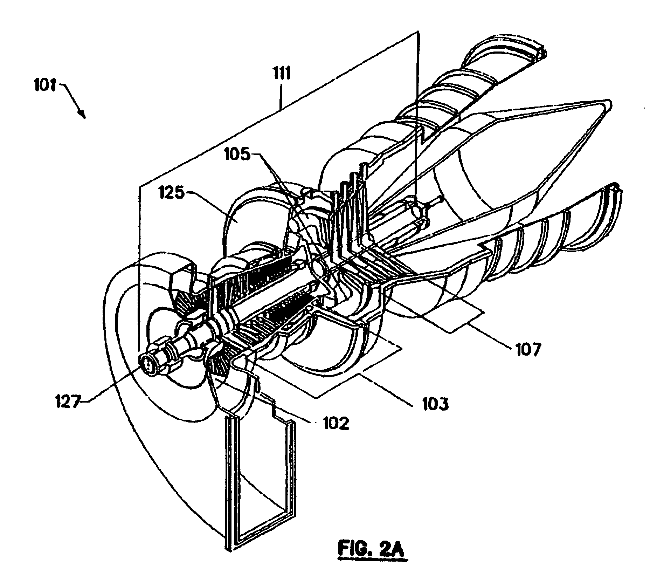

An inlet air filter 109 is connected via an inlet air duct 133 to the compressor inlet 102 (see Figure 2A), which inlet air filter 109 may be preceded or followed in certain embodiments by a conventional evaporative inlet air cooling apparatus (not shown). The inlet air duct 133 is made of an inlet air duct convergent portion 135, an inlet air duct constricted portion 137 (having a lower surface 136), and an inlet air duct manifold portion 139 with a viewport 413.

In some cases, a heat recovery unit 131 is used to generate steam from the turbine section exhaust gas. The steam generated by the heat recovery unit 131 can then be used to, for example, generate electric power from a steam turbine or operate steam driven equipment, provide heat to chemical processing facilities.

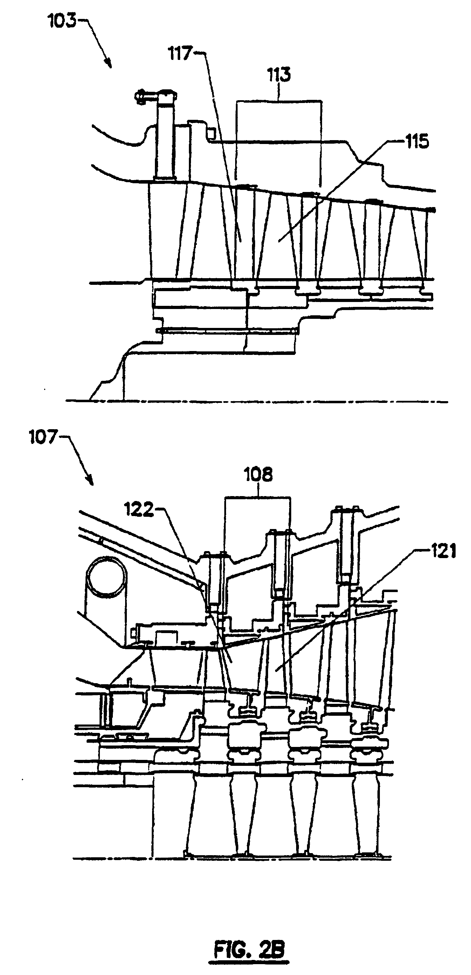

Figures 2A and 2B show further detail respecting gas turbine engine 101. After entering the compressor inlet 102, the air is compressed in the axial compressor section 103 by using a series of compressor stages 113. After compression, the compressed air then flows into combustion chambers 105 in the combustion section where it is mixed with fuel and the fuel is combusted to generate a hot pressurized gas for use in driving the turbine section 107. The turbine section 107 has a series of turbine section stages 108 which incrementally (1) convert the energy of the hot pressurized gas into work manifested as a rotating rotor 111 (preferably having coated components in the turbine section 107) and (2) generate an exhaust gas having a lower temperature and pressure than the hot pressurized gas which entered the respective turbine section stage 108. The exhaust gas from the first such turbine section stage 108 is then the hot pressurized gas for the second stage; the exhaust gas from the last stage is also the exhaust gas from the turbine section 107.

The rotor 111 is a part of both the turbine section 107 and the axial compressor section 103 and includes the rotor shaft 127 and the set of all rotor blades (115, 121) in both the turbine section 107 and the axial compressor section 103 mounted to rotor shaft 127. Rotor shaft 127 powers both the axial compressor section 103 and an electric generator or some other useful machine such as, without limitation, a large compressor used in chemical processing. In this regard, rotor shaft 127 is either a single structural component or, alternatively, a series of individual components which are mechanically attached together to form a virtual single structural component.

The various gases and fluids within the gas turbine engine 101 are generally contained by a housing 125 which defines an inner space of the gas turbine engine 101 to (a) channel the pre-compression air, (b) contain the compressed air in its progression through the sequential compressor stages 113, (c) provide a pressure shell to contain the compressor discharge around the combustion chamber(s) 105 in the combustion section, (d) contain the hot pressurized gas in which fuel has been combusted as it expands in the turbine section 107, and (e) channel exhaust gas while resident within the combustion engine 101. The housing 125 is usually constructed of several different pieces which are essentially connected together.

In axial compressor section 103, each compressor stage 113 is made up of a series of compressor rotor blades 115 mounted on the rotor shaft 127 and both the preceding and following sets of compressor stator blades 117 where, for each set, compressor stator blades 117 are mounted as a series in a radially disposed manner as a stationary blade row. The compressor stator blades 117 are (a) proximately fitted closely to the internal wall of housing 125 and (b) sealed to the rotor 111 (usually with labyrinth seals) in such a manner as to enable, in operation, an essential fluid isolation of one compressor stage 113 from its companion compressor stage(s) 113. The compressor rotor blades 115 and the compressor stator blades 117 collectively function to increase the pressure of air passing through compressor stage 113 by (1) transferring kinetic energy to the air (or gas flow) from the rotating compressor rotor blades 115 and (2) channeling the air flow, which results in a pressure and temperature rise in the air as the air is decelerated by the compressor stator blades 117 following the compressor rotor blades 115. The pressure ratio of exit pressure to inlet pressure in one compressor stage 113 is limited by intrinsic aerodynamic factors, so several compressor stages 113 are usually required to achieve a higher overall pressure ratio for the axial compressor section 103 than could be achieved by a single axial compressor stage 113.

After addition of fuel in the combustion chamber(s) 105 of the combustion section and oxidation of the fuel by the oxygen within the compressed air, the resultant hot pressurized gas is converted into work within turbine section 107; this process is achieved by transferring the high kinetic energy of the expanding hot pressurized gas to the turbine section rotor blades 121 in a series of turbine section stages 108.

Each turbine section stage 108 is made up of a series of turbine section rotor blades 121 mounted on the rotor shaft 127 and the preceding set of turbine section stator blades 122 which are mounted as a series in a radially disposed manner as a stationary blade row. The turbine section stator blades 122 are (a) proximately fitted closely to the interior wall of housing 125 and (b) sealed to the rotor 111 (usually with labyrinth seals) in such a manner as to enable, in operation, an essential fluid isolation of one turbine section stage 108 from its companion turbine section stage(s) 108. The turbine section rotor blades 121 and the turbine section stator blades 122 collectively function to incrementally decrease the pressure of the hot pressurized gas by (1) channeling the hot pressurized gas and (2) transferring kinetic energy from the expanding hot pressurized gas to the rotating turbine section rotor blades 121, producing work which is manifested in the rotation of the rotor 111 as it drives its load.

In some cases, the turbine section rotor blades 121 have multilayered surfaces or coated surfaces to enable the use of higher temperature hot pressurized gas; in some cases the turbine section rotor blades 121 have (or, alternatively, can also have) cooling provided within the turbine section rotor blades 121 through use of a machined or cast tube or cavity section within the turbine section rotor blades 121. During operation, the machined or cast tube or cavity section is in fluid communication with (a) compressed air from the axial compressor section 103 and (b) a reduced pressure discharge for exit of the compressed air; the compressed air flows through the machined or cast tube or cavity section which is positioned inside of each individual turbine section rotor blade 121 to cool that turbine section rotor blade 121.

As will be noted in another part of this specification, the use of such cooling systems for each turbine section rotor blade 121 can be most effective if measurements of the individual turbine section rotor blade 121 surface temperatures are used to identify possible plugging within the machined or cast tube or cavity section of any blade, as such plugging can restrict the flow of coolant and result in an unacceptably high temperature on an individual turbine section rotor blade 121. In a gas turbine engine 101 using the present invention, such plugging could be caused by trace mineral precipitates (from the essentially entrained nebulized or particulated water) in compressor discharge air used to cool the turbine section rotor blades 121.

The preferred process for keeping such material from entering the cooling system for the turbine section rotor blades 121 is to provide for comprehensive pre-filtering of the compressed air of the axial compressor section 103 before it is used for cooling the turbine section rotor blades 121 and for measurement of representative individual turbine section rotor blade 121 surface temperature profiles to reasonably confirm that the blades 121 are adequately cooled. A preferred system for performing such measurements of individual turbine section rotor blade 121 surface temperatures is described in US-A-4,648,711 issued on March 10, 1987 to Richard E. Zachary and entitled "Sight Tube Assembly and Sensing Instrument for Controlling a Gas Turbine". It should be further noted that best results from pyrometry used in conjunction with wet compression will be achieved if a pyrometer sensitive to a frequency of 3.9 micrometers is used in conjunction with a pyrometer sensitive at 0.95 micrometer; this avoids infrared emissions from the water vapor carried into the turbine section 107 which would confound pyrometry measurements performed only at 0.95 micrometer sensitivity.

Comprehensive pre-filtering of the compressed air delivered from the axial compressor section 103 before it is used for cooling the turbine section rotor blades 121 is suggested, through use of a filter interposed between the discharge of compressed air which is to be used for cooling the turbine section rotor blades 121 and the inlet tube which fluidly communicates the compressed air to each cooled turbine section rotor blade 121.

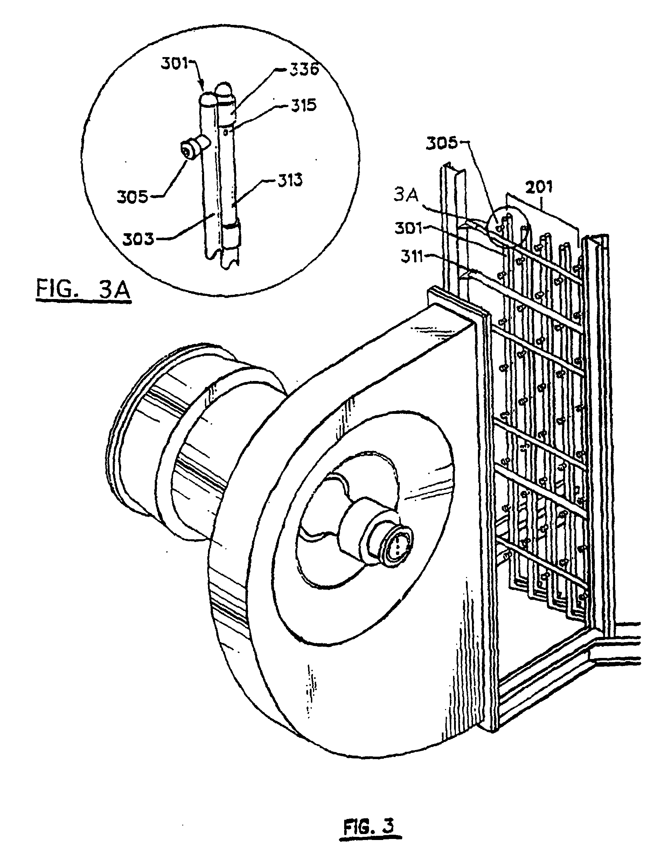

Figure 3 shows a preferred embodiment of a means for providing liquid water particles to the working fluid acquired by the axial-flow compressor 103, and, thereafter, for controllably augmenting (and correspondingly, controllably reducing) the amount of liquid water provided to the working fluid to reduce the temperature increase of the working fluid caused by compression.

The invention in this regard contemplates providing a working fluid to be acquired by the compressor which preferably comprises essentially from at least three-quarters of one weight percent and, more preferably, from two weight percent to eight weight percent liquid water in admixture with essentially fully humidified air (such as may be provided in a retrofit context by existing full evaporative inlet air cooling equipment, or where the turbine in question is not already equipped with some form of evaporative inlet air cooling, preferably the evaporative cooling is accomplished by the same power augmentation apparatus provided by the present invention). Preferably at least a ten percent increase in the net output and, most preferably, a twenty to a forty percent increase in the net output of a gas turbine such as gas turbine 101 is achieved through introducing liquid water to the working fluid acquired by the compressor 103, for example, via the apparatus shown in Figure 3. This increase in net output is measured against the net output of the turbine under comparable conditions but without the addition of water by means of the apparatus and process of the present invention (and thus, for clarity, in the particular context wherein the turbine employs evaporative inlet air cooling, the increase in net output is as compared to the net output realized with said evaporative inlet air cooling). In the preferred embodiment shown in Figure 3, as has been suggested above, the means for providing liquid water can also be used to fully humidify the working fluid (that is full saturation), where the turbine in question has not been previously equipped with known chiller- or media-type evaporative inlet air cooling means, for example.

Referring now specifically to Figure 3, a preferred apparatus for adding liquid water to the working fluid acquired by the axial compressor section 103 comprises a spray rack group assembly 201 communicating with the compressor inlet 102 of the axial compressor section 103. The spray rack group assembly 201 can be positioned anywhere between the inlet air filter 109 and the compressor inlet 102, but is preferably inserted into the inlet air duct 133 in the inlet air duct constricted portion 137 after the inlet air duct convergent portion 135. This positioning has benefits in that sufficient separation from the compressor inlet 102 is provided so that a nozzle 305 (or other damaged part of either a steam addition system to be described more particularly hereafter or of the spray rack group assembly 201) which might become detached from spray rack group assembly 201 will be gravitationally pulled to the lower surface 136 of inlet air duct 133 before the nozzle 305 (or damaged part) is pulled into the rotating rotor 111.

The remote positioning, which provides the advantage of potentially preventing components of the spray rack group assembly 201 from breaking off and entering the axial compressor section 103, requires that the spray rack water nozzles 305 develop a sufficiently fine mist of liquid water such that the mist will be essentially entrained in the working fluid. At closer distances between the spray rack water nozzles 305 and the compressor inlet 102, a more coarse spray can be employed provided that a sufficiently uniform distribution of water in the working fluid is attained to limit deformation of the housing 125 to a generally predetermined acceptable limit that prevents damage to the axial compressor section 103 (as is described more fully hereinafter).

It will be appreciated that the use of a coarser spray may require changing the flow profile of the liquid water droplets added to the working fluid to ensure sufficient uniformity of the dispersion of the liquid water in the axial compressor 103 to avoid unacceptable angular distortion of the housing 125. The procedure for determining the appropriate flow pattern can follow the same procedure as is described with respect to the preferred embodiments of the invention below.

Those skilled in the art will further appreciate that while it is thus generally desirable to remove the means provided for adding water to the working fluid a sufficient distance away from the compressor inlet to avoid damage to the compressor should a nozzle, for example, or some other structural element of the particular water-addition means employed break loose and be carried toward the compressor inlet, the attainment of a sufficiently fine mist to ensure a uniform distribution of water in the working fluid at the compressor inlet and to fully saturate the first compressor stage so as to obtain the full mass flow benefits of wet compression may require (in the context of a spray rack group assembly 201) a large number of nozzles 305, a high delivery pressure and a correspondingly larger pumping system, or both to deliver the contemplated mass of water for a desired level of augmentation. A coarser spray system will generally entail less capital to install, but may not provide a sufficient entrainment and uniformity of distribution of water in the working fluid acquired by the compressor, unless positioned closely enough to the inlet 102 so that there remains some risk of a nozzle being carried into the compressor in operation.

The optimum means and arrangement for delivering liquid water to the working fluid acquired by the compressor will, in general, correspond to that means and arrangement which has the lowest overall cost for achieving full saturation of the first compressor stage and the maximum mass flow benefits from the water addition for a given overall level of power augmentation, and which will do so without causing excessive distortion of the housing 125 and compressor rub, considering the probability or risk of a nozzle 305 being carried into the compressor section 103 and the consequences in terms of cost of this occurring, and the total cost of the nozzles and other system components (hardware) associated with a given arrangement and selection of water addition means. It may accordingly be preferable to employ a plurality of means for inputting the total mass of liquid water contemplated to the working fluid, at various points or positions relative to the compressor inlet.

Thus, for lower levels of augmentation (up to 10 percent augmentation), as has previously been suggested it will generally be sufficient to employ a compressor water wash arrangement only, whereby a conventional compressor water wash amount of liquid water (which amount will vary according to the turbine type and size to be augmented, but typically being from 0.1 to 0.5 percent by weight of the working fluid) is continuously provided over an extended period of time to the working fluid acquired by the compressor; preferably the nozzles in this embodiment will be of a type to supply the water predominantly or exclusively as a fine mist having a mean average droplet size of 200 micrometers or less, although it may be advisable in employing such very fine misting nozzles to position and employ supplemental water addition apparatus upstream (that is, farther removed from the compressor inlet 102) as needed to cover "gaps" in the distribution of liquid water to the working fluid as might be caused by plugging of the fine misting nozzles proximate the compressor inlet. An especially preferred nozzle for this particular embodiment is produced by Rochem Technical Services, Ltd. under the FYREWASH™ name, and is characterized as being cantilevered into the inlet air stream for providing an entrained, fine mist spray having a mean average droplet diameter estimated by the Inventors to be between 100 and 200 micrometers (but certainly exceeding 70 micrometers), at a pressure drop of generally 80 pounds per square inch, gauge (psig) (550 kPa, gauge).

Generally, beyond the provision of supplemental water addition means in certain circumstances as described in the preceding paragraph, the apparatus employed for providing a conventional compressor water wash amount of liquid water to the working fluid will be the same as would be employed on a given turbine for compressor water wash purposes (for example, an annular spray pipe with equally-spaced spray nozzles around the annular spray pipe), and as those skilled in the art are well-acquainted with these types of systems, a detailed further discussion of the same is not warranted.

Where greater levels of augmentation are desired, that is, from greater than a ten percent, and especially greater than a twenty percent increase in the net output of the gas turbine, then preferably one or more spray rack group assemblies 201 are employed alone or in combination with still other means. With respect to the latter of these two possibilities, an arrangement which is especially suited to carry out the on-line cleaning process of the present invention will employ a first means, proximate the compressor inlet 102, for supplying (continuously for purposes of power augmentation or intermittently for on-line washing purposes only) a conventional water wash amount of liquid water to the working fluid in preferably a coarse spray form, as well as a second means for adding liquid water to the working fluid to be acquired by the compressor, said second means being in the form of a spray rack group assembly 201 in the inlet air duct constricted portion 137. Where both the first and second means are employed essentially in combination to input the desired total mass of water (as opposed to where the first means is employed only for washing purposes according to the on-line cleaning process of the present invention), preferably the first and second means are selected so that the mass of liquid water added to the working fluid by the combination of these is predominantly in the form of a fine mist having a mean average droplet diameter of 200 micrometers and less.

With respect to the spray rack group assembly 201 depicted in Figure 3, the assembly 201 is made up of a group of individual spray racks 301, where each individual spray rack 301 is made up in turn of a spray rack water pipe 303 with a group of spaced spray rack water nozzles 305 for nebulizing the water which is sent through the spray rack water pipe 303. Additionally, a spray rack steam pipe 313 with spray rack steam hole(s) 315 is provided to add steam heating to the inlet air. Mounting sleeve(s) 336 are periodically employed on each spray rack steam pipe 313 to provide free movement during thermally induced expansion and contraction of the spray rack steam pipe 313.

Preferably very clean water, for example, water having a conductance of 0.4 micromhos or less with no particulates, whether as condensate water or distilled, deionized water, is in this manner nebulized (or atomized) to form a preferably very fine spray or fog of water. A number of known, commercially-available nozzle designs could be employed for providing this very fine water spray, for example, the above-mentioned FYREWASH™ nozzles from Rochem Technical Services, Ltd. (such entity having an office at 610 N. Milby Street, Suite 100, Houston, Texas 77003), a 1-7N-316SS12 nozzle from Spraying Systems Co. (P.O. Box 7900, Wheaton, Illinois, 60189) which provides a spray characterized by a volume mean diameter of 153 micrometers (2 gallon per minute (7.6 litres per minute) flow rate) at a pressure drop of 80 psig (550 kPa, gauge) and a temperature in the range of 45 to 165 degrees Fahrenheit (7.2 degrees Celsius to 73.9 degrees Celsius), or a 1-7N-316SS16 nozzle from Spraying Systems Co. which provides a spray characterized by a volume mean diameter of 188 micrometers (2.6 gallon per minute (9.9 litres per minute) flow rate) at a pressure drop of 80 psig (550 kPa, gauge) and a temperature in the range of 45 to 165 degrees Fahrenheit (7.2 degrees to 73.9 degrees Celsius).

With further regard to the water used and the aforementioned risks which have heretofore been associated with the use of wet compression power augmentation, it is anticipated that very pure water may negatively impact the components of the gas turbine engine 101, insofar as critical chemical elements vital to alloyed materials used in the construction of gas turbine engine 101 can be leached, by the very pure water, from the affiliated components and thereby detrimentally alter the beneficial properties of the alloyed materials; in this regard, technically ideal water would result, for example, from a process where extremely pure water is passed through a facilitative mass transfer system. An example of such a facilitative mass transfer system is where the pure water is passed over beads of chemical elements which are compositionally balanced so that the resulting water stream contains sufficient quantities of each critical alloying element respective to the materials of construction of the components of gas turbine engine 101, so that the resulting water stream sufficiently minimizes any effects of leaching with regard to critical and vital chemical elements in the alloyed components of the gas turbine engine 101 that the integrity of those components is properly preserved as wet compression is executed.

As suggested by the provision of spray rack group assembly 201, at higher levels of augmentation capacity exceeding 10 percent of the net output of the turbine 101 absent the addition of liquid water as taught herein, the present invention contemplates that the significant amounts of liquid water required for these higher levels will be added or removed in a controlled fashion so as to avoid thermal shocks to the turbine 101 and any surging of the compressor 103. This controlled augmentation can entail a smooth ramping-up of the liquid water provided to the working fluid acquired by the compressor 103, such as by increasing the water pressure providing water to one or more of the spray rack nozzles 305. In the alternative, the liquid water can be provided to the working fluid acquired by the compressor section 103 in a stepped, incremental fashion. Yet, as another alternative, a combination of smooth ramping and/or stepped modification of the amount of water provided to the working fluid acquired by the axial compressor section 103 can be beneficially employed either in a concurrent fashion or sequentially.

Most preferably, however, the liquid water, when either increasing or decreasing its flow, will be added or reduced in a stepped manner using a plurality of water mass flow increments. With respect to the preferred use of a plurality of water mass flow increments, a preferred apparatus for practicing the invention comprises spray rack nozzles 305, wherein each individual spray rack 301 can be viewed as generating a nebulized water mass flow increment as determined by the pressure drop across the set of spray rack water nozzles 305.

Alternatively, those skilled in the art will appreciate that each nozzle 305 will in turn have a range of pressures over which a particular liquid can be properly nebulized given an adequate supply of the liquid being nebulized, and that the nozzles 305 themselves may accordingly be viewed as individually essentially defining an increment of water addition; the smallest increment of water mass flow may then be the increment of water mass flow needed to activate the smallest nozzle 305 which might be deployed in facilitating wet compression. Parenthetically, as should be apparent, if the water mass flow were, in either a continuous flowrate or incremental flowrate manner of operation, to be modified to decline below the minimum water mass flow needed to achieve the generation of acceptable spray for entrainment and mixing into the inlet air, then the water being added would not become essentially entrained but would be swept as an unnebulized water mass into the compressor inlet 102 in a non-uniform pattern. The negative effects of the unnebulized water mass being swept into the compressor inlet 102 in a non-uniform pattern relate to the distortion concern and to a more rapid erosion of components subject to impact of the unnebulized water mass. With respect to the range of pressures over which a fluid can be reasonably nebulized, some continuous analog adjustment in the amount of flow can be facilitated by modifying the delivery pressure, but the effect of these modifications on attributes of the spray from the nozzles 305 needs to be considered as this is implemented. It is expected that this approach to adjusting mass flow of liquid may have some use, however, in fine-tuning the spray delivery after wet compression has been essentially established.

If the pressure is controlled to the spray rack water pipe 303, a group of spray rack water nozzles 305 connected to that spray rack water pipe 303 will operate to process a general increment of water mass flow equal to the sum of the individual spray rack water nozzle 305 mass flow increments.

In an alternative embodiment, each individual spray rack water nozzle 305 may be separately valved and controlled to provide a maximum number of controllable water mass flow increments, with each increment being the essentially predictable and constant flow where the spray rack water nozzle 305 will deliver its functionally suitable spray pattern at the pressure drop available.

In yet another embodiment, a group of spray rack water pipes 303, each having an associated spray rack water nozzle 305 set controlled at the spray rack water pipe 303 level, may be mixed with other spray rack water nozzles 305 which are individually controlled.

It should be apparent from the above that a number of different arrangements of nozzles and pipes can be employed to provide liquid water to the working fluid acquired by the axial compressor 103 for higher levels of wet compression power augmentation, and in a more particular context to provide a mass flow of nebulized water to the working fluid in a plurality of nebulized water mass flow increments. 'In some cases also, the spray rack water nozzles 305 may be selected to be of different sizes and arranged to provide either predefined spray concentration profiles from a particular spray rack water pipe 303, or to facilitate passage and flushing of particulates from within a particular spray rack water pipe 303 to avoid clogging of subsequent spray rack water nozzles 305 carried on the pipe 303, as by employing a larger throughput nozzle 305 with larger internal clearances upstream of smaller throughput nozzles 305 on a given spray pipe 303.

Fundamentally, however, what is again required is that the mass flow of liquid water provided to the working fluid (or removed therefrom) will be modified as necessary over time and/or with respect to position (or area of liquid water addition leading to the compressor inlet 102) so as to moderate and effectively reduce (a) thermal stresses imposed on the gas turbine 101 and (b) the rate of change of thermal expansion and thermal contraction related to the addition of relatively large amounts of liquid water to the working fluid. The spray rack group assemblies 201 of Figure 3 provide an effective and convenient means for accomplishing these objectives.

Yet another desirable attribute of the process and apparatus for adding liquid droplets to the working fluid acquired by the compressor 103 is related to controlling angular distortion or deformation of the housing 125 which relates to the providing of liquid water to the working fluid. If the liquid droplets, on a mass basis, are not sufficiently uniformly distributed in the working fluid, the working fluid will create temperature differences inside the axial compressor section 103 due to the fact that the mass distribution of the liquid water in the working fluid is not substantially or adequately uniform. These temperature differences in turn can lead to localized differences in the linear dimension of the housing 125, and thus to potentially damaging angular distortion or deformation of the housing 125.

The Inventors' experience has been that the water droplets provided to the working fluid by means of a plurality of spray rack group assemblies 201, for example, travel in a generally laminar fashion through the compressor 103 with surprisingly minimal mixing; thus, the rotation of the rotor 111 and rotor blades (115) can not generally be counted on to sufficiently relieve substantial temperature variances inside the compressor 103, due to non-uniform distribution of the added liquid water in the working fluid at the compressor inlet 102. Preferably, then, the angular deformation of the housing 125 caused by adding liquid water to the otherwise normally-humidified working fluid is controlled by providing affirmative means for achieving and maintaining a sufficiently uniform distribution of water droplets in the working fluid, to ensure that any water addition-associated angular deformation of the housing 125 is limited to a predetermined acceptable limit that prevents damage to the axial compressor section 103 of the turbine 101.

The angular deformation of the housing 125 can in this regard be monitored and modeled using the laser emitter 403 and laser target 407 described in more detail hereinafter. The use of a plurality of nebulized mass flow increments, as contemplated by the present invention, is particularly suited to the measurement and control of water addition-related deformation of the housing 125, based on the amount of deformation previously measured as a function of the addition of each of the increments and the response of the housing 125 to the addition or removal of various increments over time, or with respect to position in relation to the compressor inlet 102 and to other increments. For example, as each mass flow increment is activated, any incremental increase or reduction in the housing's deformation associated with the addition (or removal) of that increment can be measured. Once the system is qualified on a turbine for the addition of a certain mass flow rate of liquid water and with regard to a particular inlet configuration, it is expected that the water-addition system so qualified can then be confidently operated to control deformation within a generally predetermined acceptable limit even though measurements are no longer made (for example, the measuring system may be removed). In this regard, the measuring system is most advantageously used for design purposes and may or may not be used as a permanent part of the turbine power generation facility 100 after the angular deformation of the housing 125 is adequately defined with respect to a specific spray rack group assembly 201 and nozzle 305 design. Those skilled in the art will appreciate that mathematical modeling of the addition of various increments of nebulized liquid water to the working fluid may also be used to advantage for this purpose.

Most desirably, a sufficiently uniform distribution of liquid water in the working fluid is simply accomplished by supplying liquid water to the compressor 103 predominantly as a mist or fine spray of particles having a mean average droplet diameter of 200 micrometers or less, more preferably being 120 micrometers or less and especially being 70 micrometers or less, which will, due to entrainment, substantially follow the velocity vectors associated with the air acquired by the working fluid. Thus, the deficient area can, through the essentially entrained movement of the liquid water be reliably enriched with liquid water, in turn controlling the deformation of the housing 125 by counteracting the imbalance in the water distribution inside the axial compressor section 103. In other words, the essentially entrained liquid water droplets tend to follow a laminar flow process inside the axial compressor, allowing areas which are deficient in water to be identified and compensated-for in order to control housing deformation. This means that the droplets need to be dispersed uniformly or sufficiently uniformly on a mass basis in the inlet 102 in order to be ingested into the axial compressor section 103 in such a manner as to ensure generally adequate uniform distribution of the liquid droplets within the working fluid inside the compressor section 103. That is, if generally uniform distribution is achieved in the inlet 102, the temperature distribution inside the compressor 103 will be properly maintained to ensure that the housing 125 deformation is limited to tolerances which will not cause damage to the gas turbine 101.

Depending on the positioning of the spray rack group assembly 201 and the manner in which water is thus added for a particular gas turbine engine 101, it will however be appreciated that a uniform sizing and distribution of the nozzles 305 across a cross-section of the inlet air duct 133 occupied by the spray rack group assembly 201 may not be best for accomplishing the desired uniformity in the nebulized water flow to the compressor inlet 102. Rather, the optimum arrangement can appropriately be determined through observation of the effect of various arrangements for various incremental additions of water on distortion of the housing 125.

To expand upon a feature or aspect mentioned previously, where this mode of operation is feasible, the spray rack group assembly 201 is preferably positioned essentially in the inlet air duct constricted portion 137 and with sufficient separation from said compressor inlet 102 such that, in operation, any spray rack water nozzle 305 (or any other damaged portion of the spray rack group assembly 201) which breaks away from the spray rack group assembly 201 will be gravitationally pulled to the lower surface 136 of inlet air duct 133 before the spray rack water nozzle 305 (or damaged portion) is pulled into the compressor inlet 102 and/or rotating rotor 111 by forces derived from pressure and flow attributes within inlet air duct 133. The reason for positioning the spray rack group assembly 201 in the inlet air duct constricted portion 137 instead of in the inlet air duct convergent portion 135 is that the velocity of the inlet air stream is generally higher in the inlet air duct constricted portion 137 than in other parts of inlet air duct 133, and the nebulized water from the spray rack group assembly 201 will, as a consequence, generally be more effectively entrained into the flowing inlet air stream.

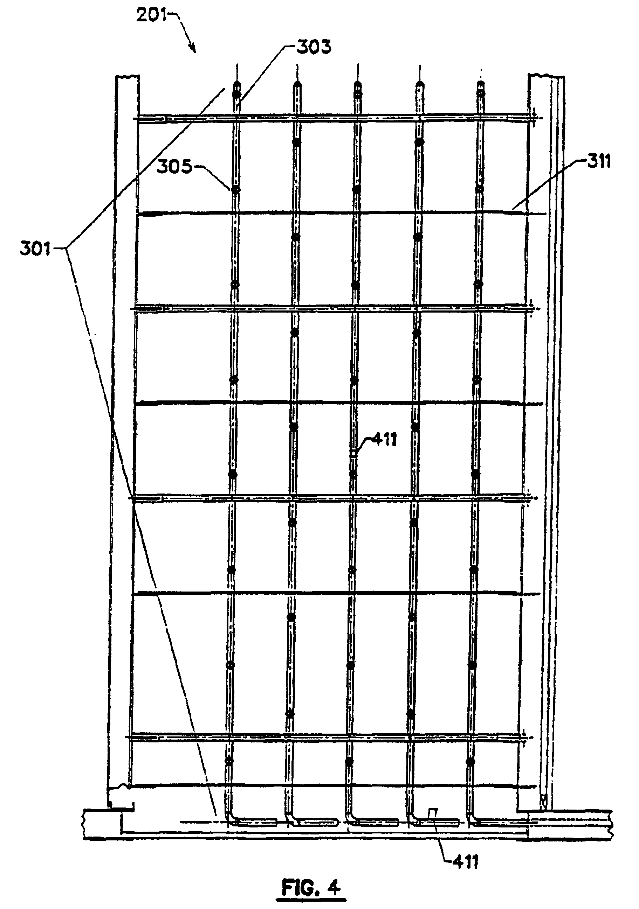

Figure 4 shows further details for the layout of the spray rack group assembly 201 shown in Figure 3, showing, in an elevation view, the relative location of individual spray racks 301, the positioning of each spray rack water nozzle 305, and the use of spray rack stiffeners 311. In this regard, the dimensions and connections for spray rack stiffeners 311 are confirmed empirically to define a stable system which will be structurally robust A system which can also be used to monitor the spray rack group assembly 201 for overall integrity during operation is a spray rack vibration monitor 411, for detecting unacceptable resonance in the assembly 201.

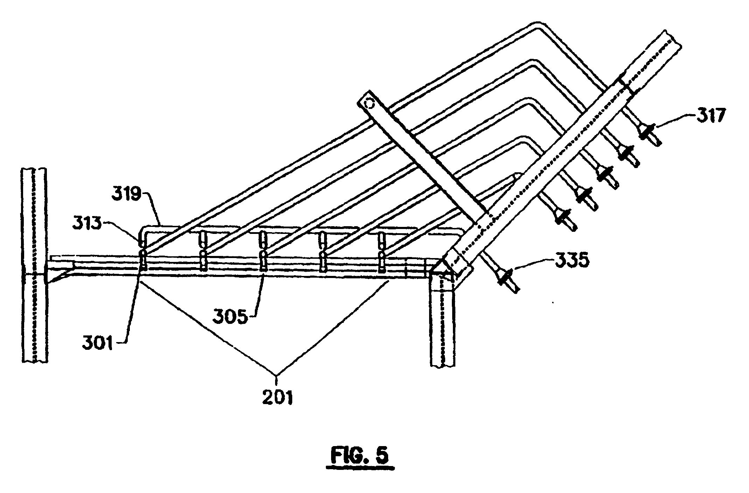

Figure 5 shows plan view assembly details of the spray rack assembly of Figures 3 and 4 and illustrates a preferred manner of adding both heat and humidity to the working fluid to allow continued power augmentation during periods when the temperature of the working fluid would otherwise drop to a level which would allow detrimental ice formation in the inlet. The preferred method involves providing steam to the inlet 102, as for example where steam is added to the spray rack steam pipes 313 via steam manifold 319. The steam is added in the embodiment of Figures 3, 4, and 5 to provide steam sufficient to achieve a temperature in the inlet air which is above a point where water in the air freezes in the compressor inlet 102. At least one steam hole 315 is used for each spray rack steam pipe 313, although a preferred construction is that about 5 steam holes 315 are provided for each spray nozzle 305; these steam holes 315 are equally dispersed along each steam pipe 313 for enabling a correspondingly substantially uniform addition of heat and humidity to the working fluid as is desired for the liquid water addition. Generally, it is expected that the compressor inlet 102 will be most susceptible to icing due to cooler inlet air proceeding along or being channeled along the walls of the housing 125 in the vicinity of the compressor inlet 102, and so preferably sufficient steam will in all embodiments be provided by means of the pipes 313 or by other, supplemental means at the periphery of the inlet air duct constricted portion 137, to prevent icing from occurring in this matter.

In order to further assure that the gas turbine engine 101 is not adversely affected by any inrush of liquid which will result if any spray rack water nozzle 305 should become detached from its spray rack water pipe 303, a restricting orifice 317 or other suitable flow restricting means (which is sized to limit the throughput of water in the respective spray rack water pipe 303) is preferably inserted into the source feed line for the spray rack water pipe 303. A steam flow restricting orifice 335 also restricts the amount of steam added in case of any breakage in the steam delivery system.

It is important to manage the inlet air temperature at the compressor inlet 102 to prevent the water added and essentially entrained in the inlet air from freezing on surfaces in the vicinity of the inlet guide vanes of the compressor. Ice may starve the compressor into surge or may break free and encounter the rotating blades 115 in the axial compressor section 103.

The temperature of the working fluid in the compressor inlet 102 is preferably monitored with at least one temperature sensor (not shown) to help identify the proper amount of steam that needs to be added to the inlet air; in the case of essentially pure water, the inlet air temperature should generally be maintained above 45 degrees Fahrenheit (7°C) to assure that icing will not be induced by adiabatic expansion in the compressor inlet 102. In the absence of the heating provided, for example, through the addition of the steam via steam holes 315 or by other means, it will be appreciated that this temperature limit effectively places an ambient temperature constraint on gas turbines employing the wet compression technology of the present invention with pure water addition. However, the heating provided through steam addition (generated in an added heat recovery unit 131 for a gas turbine power generation facility 100 operating in simple cycle or from low-pressure steam available in a facility operating in combined cycle) enables utilization of the present invention at considerably lower ambient temperatures.

With particular regard to a combined cycle operation with evaporative inlet air cooling, additional, presently unutilized heat may additionally be recovered and beneficially applied for inlet air heating purposes by cross-exchanging the condenser heat from the steam turbines to the evaporative inlet air cooler (not shown) for purposes of inlet air heating and humidification (effectively turning the evaporative inlet air cooler into an evaporative inlet air heater/humidifier), such that, with added steam injection (or, possibly, without steam injection), operation of the wet compression technology of the present invention should be enabled at ambient temperatures well below 45 degrees Fahrenheit (7.2 degrees Celsius)- certainly as low as 15 degrees Fahrenheit (-9.4 degrees Celsius), although the practical lower temperature operating limits are more appropriately determined on a case-by-case basis.

An additional safeguard against potentially destructive icing occurring at the compressor inlet 102 is preferably provided by placing at least one viewport 413 in the wall of the inlet air duct manifold portion 139 which enables viewing and scanning for ice buildup by an operating technician. If such a viewport 413 is used, the use of a video camera (not shown) can further simplify the information gathering process by enabling an operating technician to have a convenient visual of the interior of the inlet air duct 133 and/or compressor inlet 102 on a video screen monitor. In this regard, the water mass flow may need to be reduced or interrupted to facilitate a full visual examination of that part of the interior of inlet air duct 133 and/or compressor inlet 102 which can be viewed from viewport 413. An optional further anti-icing enhancement to the system providing water to spray rack group assembly 201 is to also mix a material into the water stream which depresses the freezing point of the water particles. In this regard, freezing point depressants such as methanol can be used to provide for a lower working temperature in the inlet air.

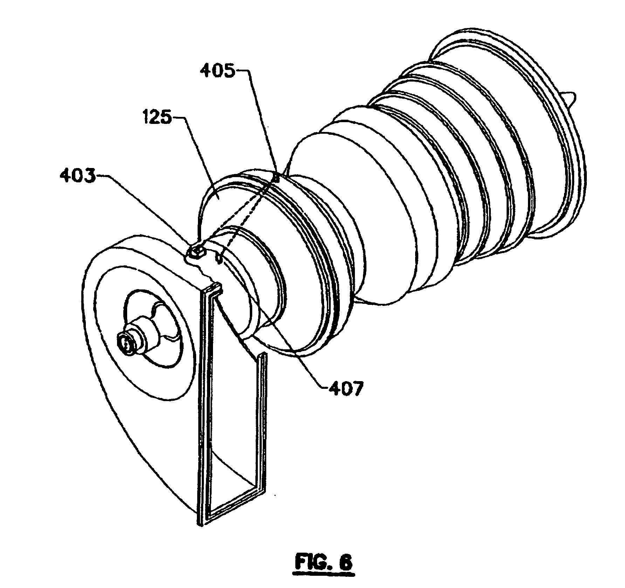

Figure 6 presents details for one possible means for monitoring liquid water addition-related deformation of the housing 125 of the gas turbine engine 101. In this regard, the addition of a substantial mass of nebulized water into the air being processed by the axial compressor section 103 can, as previously indicated, have a detrimental effect on the gas turbine engine 101 because of cooling effects which may not be symmetrical with respect to the inner surface (inner perimeter, inner wall) of the portion of the housing 125 containing the axial compressor section 103. If one portion of the housing 125 is cooled unequally with respect to another portion, then the housing will be distorted from a completely symmetrical alignment. Such distortion can precipitate the disruption of internal fluid flows in the axial compressor section 103, inducing a stall or a rotating stall leading to destructive stresses in the components of the axial compressor section 103, or such distortion can induce mechanical rubbing between components of the axial compressor section 103, resulting in either damage to these components or, possibly in the most extreme case, a compressor wreck.

Figure 6 shows the use of a laser emitter 403, a laser reflector 405, and a laser target 407 to achieve monitoring of distortion in the housing 125. It should be noted that the use of the laser reflector 405 is to provide a response to angular distortion, and a series of laser reflectors 405 can be used as desired to further enhance the sensitivity of the assembly to distortions of the housing 125 by effectively multiplying the angular displacement and distance that the laser beam emitting from the laser emitter 403 will undergo prior to registering upon the laser target 407. In a less sensitive deployment of the laser, no laser reflector 405 is used. In a preferred embodiment of the invention, a single laser reflector 405 is considered acceptable for axial compressor sections 103 of traditional length (in some emergent designs, however, a more sensitive arrangement may be best). Multiple sets of laser emitters 403, laser reflectors 405 and laser targets 407 can be used to monitor the distortion of different portions of the housing 125, or the beam from the laser emitter 403 can alternatively be split, using a partially reflective mirror (not shown), and then directed to different laser reflectors 405 mounted on different parts of the housing 125 for sensing by different laser targets 407, each directed to monitoring distortion of a different part of the housing 125.

The non-symmetrical cooling effects of the housing 125 are additionally of concern when the gas turbine power generation facility 100 has an inlet air duct 133 attached to the housing 125 with an inlet air duct constricted portion 137 (the preferred location for the spray rack group assembly 201), where the axis respecting the inlet air duct 133 (said axis being defined as the continua of the general fluid flow and flux cross-sectional midpoints aligned with the direction of general fluid flow and flux in the duct) is essentially perpendicular to the axis of rotation for the rotor 111 (as is shown in Figure 1). In this case, the rotor shaft 127 may rotate within a tunnel transversing and suspended within the inlet air duct compressor inlet manifold portion 139; the tunnel constitutes a fluid-flow obstacle which, along with the essentially right angled fluid flow directional change induced by the perpendicular inlet duct axis with respect to the rotor axis, presents certain challenges for obtaining a desired equal and symmetrical distribution of nebulized water in the inlet air stream at the compressor inlet 102.

As discussed previously, the positioning, water mass increment definition and sizing of individual spray rack nozzles 305 and spray rack water pipes 303 are preferably designed in this instance to provide a sufficiently symmetrical and uniform cooling of the housing 125 that the housing 125 will not be unacceptably distorted. The modification of the mass flow of nebulized water to the compressor inlet 102 via a plurality of nebulized water mass flow increments is then done in operation so that operationally-induced thermal stresses within the gas turbine engine 101, due to the use of the modified mass flow of nebulized water, are sufficiently minimized to preserve the overall structural integrity of the gas turbine engine 101. In this regard, temperature shocks due to very rapid modification of the mass flow of nebulized water to the compressor inlet 102 can (even where there is a uniformity of distribution of water in the working fluid) induce cracking in certain alloyed components within the gas turbine engine 101 if the surface temperature of the component is rapidly decreased (inducing thermal contraction in the surface portion of the component) while the remainder of the alloyed component is either (a) not comparably contracted or (b) is in a state of dimensional expansion.

Another wet compression-related instrumentation enhancement of the present invention concerns the use of a combustion section liquid presence sensor to ascertain the presence of liquid in the entrance to the combustion section at the compressor outlet. In this regard, it may be of use to either limit the amount of water mass flow added to such a level that liquid is not sensed at the compressor outlet (inlet to the combustion section), or (if the combustion chambers 105 are sufficiently robust or protectively coated to withstand any potentially erosive effects of water from the compressor outlet) it may indeed be desirable to add sufficient water to definitely achieve liquid in the combustion section, to achieve still further extended power augmentation in a manner similar to that now achieved in the art by water injection to the turbine section for nitrogen oxides (NOₓ)control. Such a sensor or set of sensors should be located at the interior perimeter (inside wall) of housing 125 at the compressor outlet since any free liquid will probably be centrifugally moved to that position.

To aid in the operation of the gas turbine engine 101 incorporating water addition. according to the present invention, a process control computer (not shown) is, in some cases, connected to the valves (not shown) which are used for adjusting the mass flow of nebulized water and to the laser target 407, so that the process control computer can execute process control logic for controlling ("turning on" or "turning off") the mass flow of nebulized water to each individual spray rack water pipe 303 and spray rack water nozzle 305, so that deformation in the housing 125 is minimized. In this regard, some embodiments of the present invention use individual tuning nozzles (not shown) which can be installed in either the spray rack assembly 201 or at some other location in the inlet air duct 133 or compressor inlet 102 to provide additional degrees of freedom in achieving stable and responsive control of the wet compression process. The process control computer also executes logic to control the pressure to the entire spray rack assembly 201 to fine-tune the overall mass flow of water.

Additionally, the process control computer can be connected to measure the temperature of each temperature sensor, measure the inputs from the spray rack vibration monitor 411, measure the inputs from the combustion section liquid presence sensors, control the steam flow to the spray rack steam holes 315, control the addition of a freezing point depressant to the water feed, facilitate other measurements such as optical pyrometry measurements of the turbine section blades 121, and facilitate still other measurements and control outputs which might be taken to comprehensively control the overall system's operation.

It is also contemplated that this process control computer may conventionally take into account the demand for power from an associated gas turbine or turbines 101 which are fitted with wet compression apparatus according to the present invention, and control the overall system's operation responsive to a change in this demand, or that a process control system developed for the wet compression system of the present invention may be beneficially coupled to a process control system for an associated chemical production process or facility, for example, employing power generated from a gas turbine 101 equipped with a wet compression apparatus according to the present invention. The design and execution of a particular process control scheme in this regard are beyond the proper scope of the present teachings, but are considered to be well within the capabilities of those skilled in the art for a particular operating environment and regime or set of circumstances.

In operation, for systems having the capability of providing higher levels of augmentation of the net output of an industrial gas turbine as may be generally desired in chemical processing and industrial power generation operating environments, a nebulized water mass flow is preferably supplied in a plurality of nebulized water mass flow increments during startup and shutdown of the water addition system, such that operationally-induced thermal stresses within the gas turbine engine 101 due to the use of the nebulized water are sufficiently minimized to preserve the structural integrity of the gas turbine engine 101. In this regard, best results are achieved if the amount of water is incrementally increased over time to enable an essential and reasonable thermal equilibrium of and between the various components of the gas turbine engine 101 to be achieved in a stepwise manner over a period of time, up to the amount of water flow which is desired to accomplish a given, higher level of augmentation. When the water flow rate is to be decreased, it should be decreased over time in Increments which enable an essential and reasonable thermal equilibrium of and between the various components of the gas turbine engine 101 to be achieved in a stepwise manner over a period of time down to the minimum amount of liquid water flow which is desirable (which may be no additive water flow at all). Thus, for example, the size and spacing of the increments should be such that the housing 125 and rotor shaft 127 are not caused to expand or contract to such different degrees and at such different rates, that a mechanical rub occurs between these elements because of axial misalignment. Those skilled in the art will understand that the ramp-up rates employed for various gas turbines (on a dry basis) will provide a readily adaptable basis for determining how quickly increments of a given size should be added or removed according to the present invention.

Adjustments in nebulized water mass flow increments may also be done on a positional basis, as has been suggested previously. In this regard, for example, a measured distortion in housing 125 might be best counteracted by incrementally modifying the nebulized water mass flow in the upper (top) part of inlet air duct 133 by a different percentage than that used to modify the nebulized water mass flow in the lower (bottom) part of inlet air duct 133.

Positionally as well as with respect to time, positive or negative increments of the water mass should be added or subtracted in such a manner as to properly minimize destructive thermal and mechanical stresses to gas turbine engine 101. During the initial stages of implementation, it is useful to confirm the alignment of the housing 125 periodically (after the thermal equilibrium of and between the various components of the gas turbine engine 101 has reasonably been achieved) prior to adding or subtracting the increments of nebulized water mass flow to the inlet air.

In this regard, a clear difference from any arguable teaching of wet compression power augmentation which may be found in the art described above, including the practice of short-term wet compression in aircraft as well as the supposed practice of some form of wet compression power augmentation on a land-based turbine as reported by Nolan and Twombly, is needed in facilitating wet compression in large machines operating under load; in any arguable earlier-practice of wet compression known to the Inventors, the liquid added for wet compression in these smaller gas turbines could be essentially "turned on" in a single increment (1) since a smaller gas turbine (especially as used on aircraft) was not as dimensionally sensitive to cooling effects (2) the use of wet compression was, in the aircraft case at least, only for a relatively short period of time and (3) the levels of augmentation over any more extended period of time were relatively low. In large land-based industrial gas turbines, the liquid added for wet compression should be essentially "turned on" (or, alternatively, either "turned down" or "turned off") in a stepwise plurality of increments in both a positional and time context (1) since a large gas turbine is dimensionally sensitive to associated cooling effects from the added liquid, (2) the use of wet compression is for a sustained and ongoing period of time and (3) the level of augmentation sought is generally significant and consequently implicates the addition of significant amounts of water. Nevertheless, it will be apparent to those of skill in the art that the introduction of large volumes of water into any type of gas turbine in a manner that (a) moderates thermal stresses or (b) moderates thermal expansion and contraction can be beneficially employed on any type of gas turbine, even those which are designed to ingest large quantities of water in their operating environment, such as aircraft turbines.

As a consequence of the levels of water addition contemplated by the present invention, and as precipitates are deposited on compressor elements by evaporation of the added liquid water, these deposits have been found to occur beyond the first several rows of compressor blades that are presently cleaned by conventional coarse spray compressor wash systems. As these deposits are accumulated farther into the compressor, a loss in performance is to be expected which is not addressed by present on-line wash systems and processes, but which can only be addressed through less-preferable options by way of off-line cleaning or by opening up the compressor and cleaning the same by manual means.

The Inventors have consequently developed a novel on-line compressor cleaning process for cleaning the compressor section of an industrial gas turbine employing wet compression power augmentation over a period of time. In one embodiment, as cleaning is indicated by a loss in gas turbine performance, the plurality of nebulized water mass flow increments provided by a spray rack group assembly 201, for example, is supplemented with a conventional, coarse spray compressor wash increment from an available, conventional compressor wash system positioned proximate to the compressor inlet, or one or more of the fine spray increments is replaced with a corresponding mass flow of water from the coarse spray compressor wash system. With the accumulation of deposits in subsequent rows (for example, after the first 4 to 5 rows of compressor blades), preferably a reserved fine mist increment or increments is (are) added periodically or intermittently to the essentially constant mass flow of fine mist increments being employed for power augmentation purposes, in lieu of a coarse spray cleaning increment which would be centrifuged to the compressor walls before effectively contacting these subsequent rows of blades. Alternatively, the coarse spray increment (which is useful for cleaning the initial several rows of compressor blades) is omitted or may not be readily available in the form of an existing conventional coarse spray compressor wash system, and the fine mist cleaning increment or increments are employed for cleaning the initial several rows of blades as well. For still subsequent, higher rows of compressor blades for which sufficient reserved fine mist cleaning increments may not be available, for example, rows 7, 8 and greater of an axial-flow multistage compressor, each of the spray rack increments are preferably controllably removed and the turbine is periodically or intermittently operated for a time without water addition, to volatilize and/or crack fouling deposits in these areas of the compressor.

Where off-line cleaning is warranted, the present invention similarly provides an off-line cleaning process which is especially adapted for use on industrial gas turbines which have made liberal and significant use of wet compression power augmentation. According to this aspect or feature of the present invention, the turbine is initially brought off-line at a reduced rotor speed as is conventional, and the compressor section is cooled (generally according to the turbine manufacturer's specifications and procedures) by spinning for a period of time at a second rotor speed (typically being in the range of from 900 to 1000 revolutions per minute), and configured for an off-line compressor wash. A rotor speed is then established which is intermediate the initial, turning gear rate and the second, cooling or spin gear rate which is suitable for distributing a foamed cleaning composition substantially throughout the length of the compressor. A given volume of a foamed cleaning composition is then input to the compressor via conventional means such as an air ejector; various compressor cleaning soaps and compositions are known for this purpose which will form a suitable foam, or which can be readily made to form a foam by the use of a foaming agent of some sort. Following the introduction of the foamed cleaning composition, a reduced, soaking rotor speed (which may be zero revolutions per minute but which is less than the second, spin gear cooling rate) is established and soaking is continued for as long as practical in terms of the scheduled restart of the turbine. Thereafter, the rotor speed is increased to expel the foamed cleaning composition from the compressor and to transmit through the length of the compressor a liquid water rinse, and a liquid water rinse is supplied preferably through the wet compression water addition system. Preferably the turbine is then filled a second time with a foamed cleaning composition, and again soaked and rinsed. After ensuring that the rinse water has properly drained from the turbine, the turbine is reconfigured for operation, and restarted.

In summation of the foregoing, a number of embodiments have been described herein of the process and apparatus of the present invention, but those skilled in the gas turbine art will at the same time readily appreciate that the embodiments which have been described are by no means exhaustive of the possible useful embodiments of the present invention as defined by the claims below. Thus, while the most preferred form of providing liquid water droplets to the working fluid uses spray nozzles 305 in a spray rack group assembly 201, other apparatus and processes known to the art for forming a suitable liquid mist or nebulized water droplets (that is ultrasonic water nebulizers) theoretically can be used beneficially in the practice of the invention. In addition, while the laser emitter and laser target technique provides an elegant and inexpensive process and apparatus for use in controlling the angular deformation of the housing 125 related to adding water to the working fluid, it should be apparent that there are other techniques that can be employed to beneficially produce the same type of measurement and which are well known to the prior art, including the use of instruments for detecting impending compressor rubs (as described in Simmons et al., "Measuring Rotor and Blade Dynamics Using an Optical Blade Tip Sensor", ASME Paper No. 90-GT-91 (1990), and in Simmons et al., "Turning Gear Operation, Its Influence on Combustion Turbine Rotor Eccentricity and Starting Dynamics", ASME Paper No. 93-GT-273 (1993)) or simply by inspecting the compressor after full augmentation has been practiced for a representative length of time for any evidence of compressor rub.

### EXAMPLE 1

An example of the benefit of wet compression has been an estimated power augmentation of 26 percent above the base load capacity of a Westinghouse W-501A turbine having an existing evaporative inlet air cooling system, with the introduction of 89 gallons per minute (337 litres per minute) of nebulized, hot (typically being at a temperature of between 130 degrees Fahrenheit (54.4 degrees Celsius) and 165 degrees Fahrenheit (73.9 degrees Celsius)) condensate water into the turbine's compressor. Five step increments were used through a spray rack group assembly 201 and the previously installed compressor wash system to reach the 89 gallon (337 I) per minute flow rate, with each such increment having been qualified as not causing excessive distortion of the housing 125.

Spray mist systems were installed in the inlet air ducts of two Westinghouse W-501A gas turbines, in accordance with Figures 1-6 of the present application. Each of the five spray nozzle headers in each such system could be individually valved to a common water supply capable of providing approximately 80 psi (550 kPa) to the nozzles after accounting for the pressure drop associated with a restricting orifice in each of the five header supply lines. Nebulization was sufficiently fine (on the order of 150 to 200 micrometers) to permit entrainment of the water droplets in the air flowing to the axial compressor, the inlet of which was more than eight feet away.

Based on calculations incorporating air velocity, drag coefficient, and nozzle weight, this distance provided drop time to prevent damage to the compressor in the event that a spray nozzle might have broken loose. Restricting orifices in the individual nozzle rack supply lines limited flow to approximately 35 gpm (gallons per minute, 132 litres per minute) in the event of line breakage or nozzle loss, thus protecting the compressor from uncontrolled flooding which could induced stall/surge. A computer also monitored flow for excess above the predicted rate. This supply system was used in conjunction with the existing coarse spray compressor wash system (annular nozzles) to supply a total of 89 gpm (337 litres per minute) for power augmentation by wet compression.

A self contained diode (firearm targeting) laser with restricted spot size was mounted between the fore support legs close to the compressor inlet at a convenient location. A reflecting mirror was mounted in a convenient location on the combustor shell axially displaced by a distance measured to be approximately 102 inches (2.6 metres) from the emitter. The beam was reflected onto a target mounted beside the laser diode emitter. A change in position of the spot on the target (delta) defined the change in angle between the two mount positions (alpha) by the relationship, alpha = arch tangent (delta/(2x102)]. An angular change of 0 degrees, 5 minutes, six seconds was indicated as the angle of distortion between dry operation and operation with the existing compressor wash system plus the center spray rack (which had partially plugged nozzles). This was defined by a change in the target spot position of the laser of approximately 0.303 inches (7.7 millimetres). This represented the maximum distortion observed between dry compression and maximum water used in this wet compression experiment (89 gpm or 337 litres per minute). The observed angle of distortion was the maximum allowable set for the test and represented approximately 80 percent of the allowable angle of distortion which would be required to produce a rotor rub based on 0.090 blade tip and seal clearances, machine geometry, and laser mount points, for the assumed uniform curvature between the laser and mirror mount points (102 inches, or 2.6 metres).

A "raw" power augmentation of 8.2 megawatts was demonstrated at a compressor inlet/post-evaporative cooling and spray rack assembly 201 temperature of approximately 80 degrees Fahrenheit (26.7 degrees Celsius) with 89 gpm (337 l/m)of compressor water, without adjustment for an intentional reduction in firing temperature by a downward shift of 12 degrees Fahrenheit (6.7 degrees Celsius) in the control curve and a change in compressor inlet temperature of 3 degrees Fahrenheit (1.7 degrees Celsius). An improvement in the heat rate was also observed.

The largest increment of added water was approximately 20.5 gpm (77.6 litres per minute) with an associated power increase from 33.8 Mw to 36.2 Mw (7.1 percent), using the compressor wash system (although two spray racks were put in service within a ten minute averaging period before the third test point).

### EXAMPLE 2

A Westinghouse W-501A gas turbine having evaporative inlet air cooling (generally providing inlet air of 80 percent or greater relative humidity) was equipped with a spray misting system as described and shown herein, comprised of five spray headers including a total of 38 type 1-7N-316SS16 nozzles (from Spraying Systems Co., P.O. Box 7900, Wheaton, Illinois, 60189) and consequently having the capacity to provide in excess of 90 gallons (340 I) per minute of nebulized liquid water to the turbine's compressor.

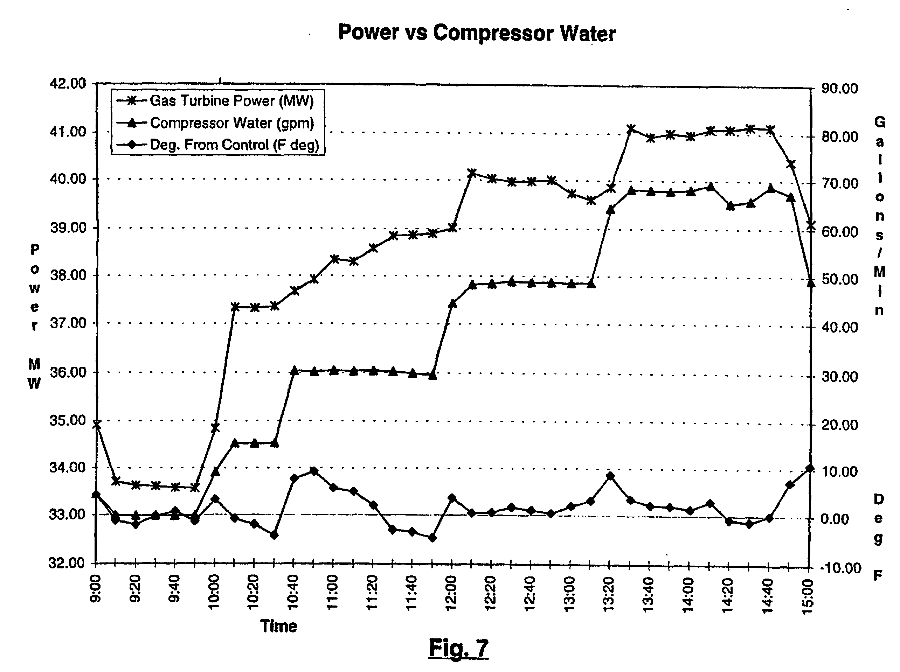

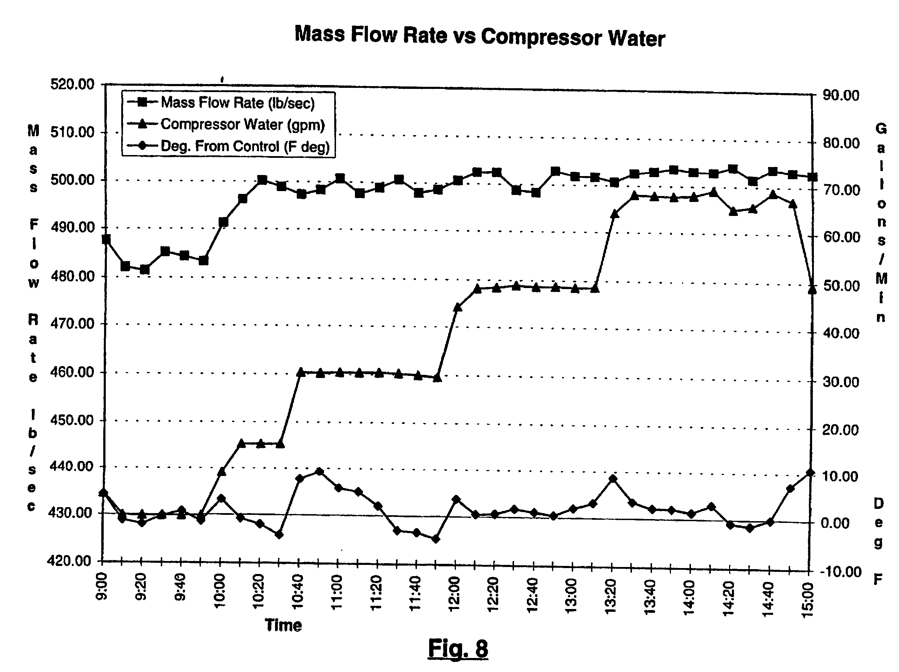

As shown in Figures 7 through 9, from a starting power production level of about 33.6 megawatts, a first header supplying about 15.2 gallons per minute (57.5 litres per minute) of the nebulized, hot condensate water was activated and an increase in power production to about 37.3 megawatts was achieved - an increase of 3.7 megawatts, or about 11 percent, based on the starting power production level.

A second header or spray rack was then added with essentially no additional decrease in the measured inlet air temperature, to incrementally raise the level of nebulized water mass flow to about 30.4 gallons per minute (115 litres per minute), whereupon a further increase of about 1.3 megawatts was realized, to about 38.6 megawatts.

The addition of a third spray rack, to bring the water mass flow to about 48 gallons per minute (182 litres per minute), brought the power production from the gas turbine to about 40.0 megawatts (again, about an incremental 1.3 to 1.4 megawatt increase).

The addition of the fourth of five spray racks resulted in a total nebulized water mass flow rate of approximately 67 gallons per minute (254 litres per minute), and a corresponding augmented power production from the turbine of about 41.1 megawatts.

The fifth rack was not added, because the limits of the associated rectifier had been reached. Total overall augmentation for the 67 gallons (254 I) per minute of nebulized liquid water added incrementally was about 7.5 megawatts, or about a 22.3 percent increase over the starting power production, of which about one-half was realized by the first nebulized water mass flow increment. A significant increase in actual inlet air flow was observed coincident with the start-up of the first spray rack, and is believed to be responsible for a significant part of the large initial increment of augmentation realized through the addition of the first water mass increment.

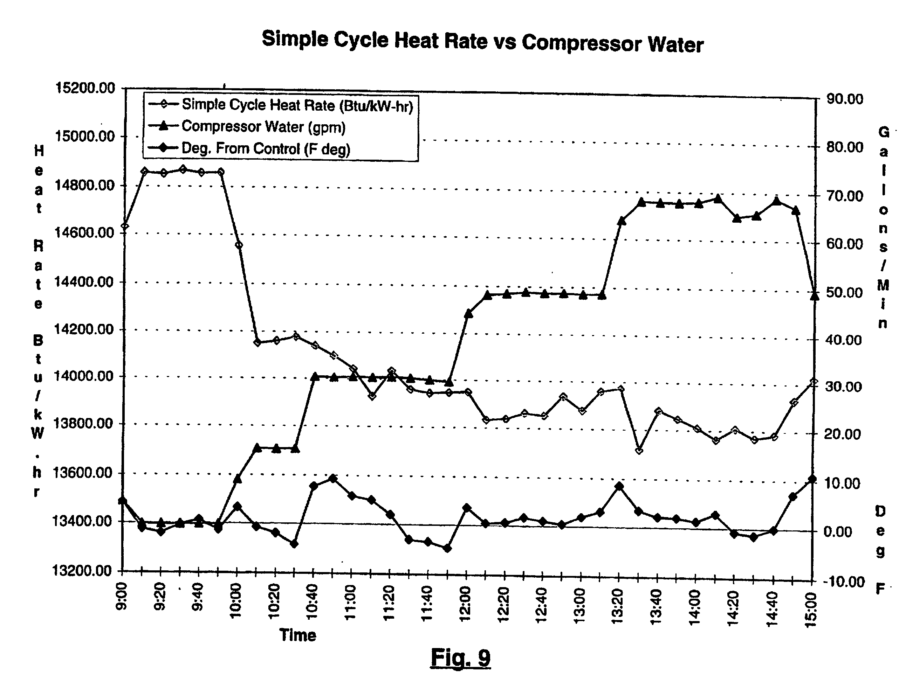

Following the achievement of this level of augmentation, the spray racks were started to be removed (as indicated by the decline in power production at the right end of the graph (Fig.7)). As will further be observed from Figure 9, an overall decrease in the simple cycle heat rate also accompanied this augmentation.

## Claims

1. A process for augmenting the net output of an industrial gas turbine (101), the gas turbine (101) including an axial-flow multistage compressor (103) having an inlet (102) for acquiring a working fluid comprising air, the process comprising the step of:
providing (201) to the working fluid acquired by the axial-flow compressor (103), in a ramped, incremental or otherwise controllably augmented manner of addition, droplets of a liquid which possesses a high latent heat of vaporization, to reduce the temperature increase of the working fluid caused by compression (103) and to thereby achieve an increase in the net output of the gas turbine (101) as measured against the net output of the gas turbine (101) under comparable conditions but without said liquid being provided.

2. A process as claimed in Claim 1, wherein the liquid provided (201) to the working fluid is an alcohol, a mixture of alcohols, water or a mixture of water and one or more alcohols.

3. A process as claimed in any one of the preceding claims, wherein said liquid droplets consist of water.

4. A process as claimed in Claim 3, further comprising the step of causing the working fluid to be at least fully humidified.

5. A process as claimed in Claim 3 or Claim 4, wherein the liquid droplets are provided (201) to the working fluid for a period of time in excess of that required to periodically clear particulate buildup on internal components.

6. A process as claimed in Claim 5, wherein said liquid droplets are provided (201) for a continuous period of at least 90 minutes.

7. A process as claimed in Claim 5 or Claim 6 used for at least six hours within a given twenty-four hour period of time.

8. A process as claimed in any one of the preceding claims, wherein the gas turbine (101) has a baseline output of at least 35 megawatts.

9. A process as claimed in any one of the preceding claims, wherein the droplets are liquid water and the amount of said liquid droplets increases said net output by at least 10 percent over the net output under comparable conditions with fully-humidified air.

10. A process as claimed in any one of the preceding claims, wherein the amount of said liquid droplets increases said net output by at least 20 percent over the net output under comparable conditions with fully-humidified air.

11. A process as claimed in any one of the preceding claims, wherein the mass flow rate of the liquid droplets initially is controllably augmented with respect to time to moderate thermal stresses within the gas turbine (101) which are related to the providing (201) of liquid to the working fluid, and thereafter a substantially constant mass flow rate is maintained for the remainder of the period of augmentation.

12. A process as claimed in any one of the preceding claims further comprising monitoring (403, 405, 407) angular deformation in the housing (125) of said compressor (103) and controlling said provision of liquid droplets to limit said deformation to predetermined tolerances.

13. A process as claimed in any one of the preceding claims, wherein said liquid droplets are supplied (201) predominantly as a fine mist having a mean average droplet diameter of less than 200 micrometers.

14. A process as claimed in Claim 13, wherein liquid water droplets are supplied (201) to the inlet (102) in the form of a plurality of nebulized liquid mass flow increments, the total mass flow of the increments being modified over time to controllably augment the amount of liquid provided to the inlet (102).

15. A process as claimed in any one of the preceding claims further comprising providing (313, 315) heat and humidity to the working fluid to allow continued power augmentation during periods when the temperature of the working fluid would otherwise drop to a level which would allow detrimental ice formation in the compressor inlet (102).

16. A process as claimed in Claim 15, wherein the provision (313, 315) of heat and humidity to the working fluid comprises providing steam to the working fluid.

17. A process as claimed in any one of the preceding claims, wherein the gas turbine (101) further comprises a turbine section (107) having a plurality of fluid cooled rotor blades (121) and said process further comprises monitoring the temperature profile of each of said fluid cooled rotor blades (121).

18. A process as claimed in any one of the preceding claims, wherein the liquid droplets are water and the amount of said droplets is sufficient to provide a working fluid to the compressor inlet (102) which comprises at least three-quarters of one percent of liquid water in admixture with fully humidified air.

19. A power production apparatus comprising an industrial gas turbine (101) including an axial-flow multistage compressor (103) having an inlet (102) for acquiring a working fluid comprising air, and droplet-addition means (201) for incrementally augmenting by a process of Claim 1 the net output of said turbine (101) by providing the liquid droplets to the working fluid acquired by the axial flow compressor (103) over a period of operation, in the form of a plurality of nebulized liquid mass flow increments, said droplet-addition means (201) comprising a first means positioned substantially adjacent the compressor inlet for providing liquid droplets thereof to the working fluid acquired by the axial flow compressor and supplemental means for providing liquid droplets to the working fluid, which supplemental means is positioned a greater distance away from the compressor inlet than the first means.

20. An apparatus as claimed in Claim 19, comprising, separate from the droplet-addition means (201), evaporative inlet air cooling means for cooling ambient air feed to the compressor inlet (102).

21. A power production apparatus comprising an industrial gas turbine (101) including an axial-flow multistage compressor (103) having an inlet (102) for acquiring a working fluid comprising air; evaporative inlet air cooling means for cooling ambient air feed to the compressor inlet (102) and, separate from the evaporative inlet air cooling means, droplet-addition means (201) for incrementally augmenting by a process of Claim 1 the net output of said turbine (101) by providing liquid water droplets to the working fluid acquired by the axial flow compressor (103) over a period of operation, in the form of a plurality of nebulized liquid water mass flow increments in an amount to achieve full humidification of the working fluid and a measure of interstage evaporative cooling in one or more stages of the compressor.

22. An apparatus as claimed in Claim 21, wherein said droplet-addition means comprises:
a first means positioned substantially adjacent the compressor inlet for providing liquid water droplets thereof to the working fluid acquired by the axial flow compressor; and
supplemental means for providing liquid water droplets to the working fluid, which supplemental means is positioned a greater distance away from the compressor inlet than the first means.

23. An apparatus as claimed in any one of Claims 19 to 22, wherein the droplet addition means (201) is positioned a sufficient distance away from the compressor inlet (102) so that if in operation under load any element of said droplet addition means (102) should break away from the remainder, such element will be gravitationally pulled to a lower surface (136) of an inlet air duct (133) attached to the turbine housing (125) and preceding the compressor inlet (102) before being pulled into contact with any element of the compressor itself (103)

24. An apparatus as claimed in any one of Claims 19 to 23 further comprising means (403, 405, 407) for detecting deformation in the turbine's compressor housing (125) as may be associated with addition of the liquid to the working fluid and flow control means connected to said droplet-addition means for adjusting the mass flow of liquid droplets provided thereby responsive to a measured deformation in the turbine's housing (125).

25. An apparatus as claimed in any one of Claims 19 to 24, wherein the gas turbine (101) further comprises a turbine section (107) having a plurality of fluid cooled rotor blades (121) and said apparatus further comprises a means for monitoring the temperature profile of each of said fluid cooled rotor blades (121).

26. An apparatus as claimed in any one of Claims 19 to 25 further comprising means for monitoring for detrimental icing at the compressor inlet (102) and means (313, 315) for providing heat and humidity to the working fluid during periods when the temperature of the working fluid including water received from the first and supplemental liquid water droplets addition means would otherwise drop to a level which would allow detrimental ice formation to occur in the compressor inlet (102).

27. An apparatus as claimed in any one of Claims 19 to 26, wherein the first and supplemental means collectively are sized to provide a working fluid to the compressor inlet (102) which comprises at least three-quarters of one weight percent of liquid water in admixture with fully humidified air.

## Patentansprüche

1. Verfahren zur Erhöhung der Netto-Leistungsabgabe einer Industrie-Gasturbine (101), wobei die Gasturbine (101) einen mehrstufigen Axialverdichter (103) mit einem Einlass (102) zur Aufnahme eines Luft enthaltenden Arbeitsmediums enthält, wobei das Verfahren folgenden Schritt umfasst:
Versehen (201) des durch den Axialverdichter (103) aufgenommenen Arbeitsmediums mit Tröpfchen einer Flüssigkeit, die eine hohe latente Verdampfungswärme aufweist, in einer ansteigenden, schrittweisen oder anderweitig kontrolliert erhöhten Zugabeweise, um den Temperaturanstieg des Arbeitsmediums infolge der Kompression (103) zu vermindern und dabei einen Anstieg der Netto-Leistungsabgabe der Gasturbine (101) zu erreichen, gemessen gegenüber der Netto-Leistungsabgabe der Gasturbine (101) unter vergleichbaren Bedingungen, jedoch ohne Zugabe der Flüssigkeit.

2. Verfahren nach Anspruch 1, bei dem die dem Arbeitsmedium zugeführte Flüssigkeit (201) ein Alkohol, eine Mischung von Alkoholen, Wasser oder eine Mischung von Wasser und einem oder mehreren Alkoholen ist.

3. Verfahren nach einem der vorstehenden Ansprüche, bei dem die Flüssigkeitströpfchen aus Wasser bestehen.

4. Verfahren nach Anspruch 3, weiter enthaltend den Schritt des Bewirkens, dass das Arbeitsmedium zumindest vollständig befeuchtet wird.

5. Verfahren nach Anspruch 3 oder Anspruch 4, bei dem die Flüssigkeitströpfchen (201) dem Arbeitsmedium über einen Zeitabschnitt länger zugeführt werden, als zum periodischen Beseitigen einer Teilchenansammlung auf inneren Komponenten erforderlich ist.

6. Verfahren nach Anspruch 5, bei dem die Flüssigkeitströpfchen (201) für eine kontinuierliche Dauer von zumindest 90 Minuten zugeführt werden.

7. Verfahren nach Anspruch 5 oder Anspruch 6, angewendet über zumindest sechs Stunden innerhalb einer vorgegebenen 24-Stunden-Zeitspanne.

8. Verfahren nach einem der vorstehenden Ansprüche, bei dem die Gasturbine (101) eine Basisabgabeleistung von zumindest 35 MW aufweist.

9. Verfahren nach einem der vorstehenden Ansprüche, bei dem die Tröpfchen flüssiges Wasser sind und die Menge an Flüssigkeitströpfchen die Netto-Leistungsabgabe um zumindest 10 % über die Netto-Leistungsabgabe unter vergleichbaren Bedingungen mit vollständig befeuchteter Luft erhöht.

10. Verfahren nach einem der vorstehenden Ansprüche, bei dem die Flüssigkeitströpfchenmenge die Netto-Leistungsabgabe um zumindest 20 % über die Netto-Leistungsabgabe unter vergleichbaren Bedingungen mit vollständig befeuchteter Luft erhöht.

11. Verfahren nach einem der vorstehenden Ansprüche, bei dem der Massenstrom der Flüssigkeitströpfchen anfänglich erfassbar über die Zeit erhöht wird, um thermische Spannungen innerhalb der Gasturbine (101) zu mildern, die mit dem Zuführen (201) der Flüssigkeit zu dem Arbeitsmedium zusammenhängen, und danach ein im Wesentlichen konstanter Massenstrom für den Rest der Erhöhungsdauer beibehalten wird.

12. Verfahren nach einem der vorstehenden Ansprüche, weiter enthaltend das Überwachen (403, 405, 407) einer Winkeldeformation in dem Gehäuse (125) des Verdichters (103) und das Steuern des Zuführens von Flüssigkeitströpfchen, um die Deformation auf vorbestimmte Toleranzen zu begrenzen.

13. Verfahren nach einem der vorstehenden Ansprüche, bei dem Flüssigkeitströpfchen (201) überwiegend als feiner Nebel mit einem mittleren Durchschnittströpfchendurchmesser von weniger als 200 µm zugeführt werden.

14. Verfahren nach Anspruch 13, bei dem flüssige Wassertröpfchen (201) dem Einlass (102) in Form einer Mehrzahl von Massenstrominkrementen zerstäubter Flüssigkeit zugeführt werden, wobei der gesamte Massenstrom der Inkremente über die Zeit modifiziert wird, um kontrollierbar die dem Einlass (102) zugeführte Flüssigkeitsmenge zu erhöhen.

15. Verfahren nach einem der vorstehenden Ansprüche, weiter enthaltend das Zuführen (313, 315) von Wärme und Feuchtigkeit zu dem Arbeitsmedium, um einen kontinuierlichen Leistungsanstieg während Zeitabschnitten zu ermöglichen, bei denen die Temperatur des Arbeitsmediums sonst auf ein Niveau abfallen würde, das eine schädliche Eisbildung in dem Verdichtereinlass (102) ermöglichen würde.

16. Verfahren nach Anspruch 15, bei dem das Zuführen (313, 315) von Wärme und Feuchtigkeit zu dem Arbeitsmedium das Zuführen von Dampf zu dem Arbeitsmedium umfasst.

17. Verfahren nach einem der vorstehenden Ansprüche, bei dem die Gasturbine (101) weiter einen Turbinenabschnitt (107) mit einer Mehrzahl von flüssigkeitsgekühlten Rotorblättern (121) und das Verfahren weiter das Überwachen des Temperaturprofils eines jeden der flüssigkeitsgekühlten Rotorblätter (121) umfasst.

18. Verfahren nach einem der vorstehenden Ansprüche, bei dem die Flüssigkeitströpfchen Wasser sind und die Menge an Tröpfchen ausreicht, um ein Arbeitsmedium dem Verdichtereinlass (102) zuzuführen, das zumindest drei Viertel Prozent an flüssigem Wasser in Mischung mit vollständig befeuchteter Luft enthält.

19. Vorrichtung zur Leistungserzeugung, enthaltend eine Industriegasturbine (101) mit einem mehrstufigen Axialverdichter (103) mit einem Einlass (102) zum Aufnehmen eines Luft enthaltenden Arbeitsmediums und einer Tröpfchenzugabeeinrichtung (201) zum stufenweisen Erhöhen der Netto-Leistungsabgabe der Turbine (101) durch ein Verfahren nach Anspruch 1, durch Zuführen der Flüssigkeitströpfchen zu dem durch den Axialverdichter (103) aufgenommenen Arbeitsmedium über eine Betriebsperiode, in Form einer Mehrzahl von Massenstrominkrementen zerstäubter Flüssigkeit, wobei die Tröpfchenzuführeinrichtung (201) eine erste, im Wesentlichen neben dem Verdichtereinlass angeordnete Einrichtung zum Zuführen von Flüssigkeitströpfchen zu dem durch den Axialverdichter aufgenommenen Arbeitsmedium und eine Zusatzeinrichtung zum Zuführen von Flüssigkeitströpfchen zu dem Arbeitsmedium aufweist, wobei die Zusatzeinrichtung in einem größeren Abstand weg von dem Verdichtereinlass angeordnet ist als die erste Einrichtung.

20. Vorrichtung nach Anspruch 19, enthaltend, getrennt von der Tröpfchenzuführeinrichtung (201), eine Einlassluftverdampfungskühlungseinrichtung zum Kühlen der Umgebungsluft, die dem Verdichtereinlass (102) zugeführt wird.

21. Vorrichtung zur Leistungserzeugung, enthaltend eine Industriegasturbine (101) mit einem mehrstufigen Axialverdichter (103) mit einem Einlass (102) zum Aufnehmen eines Luft enthaltenden Arbeitsmediums; einer Einlassluftverdampfungskühlungseinrichtung zum Kühlen der Umgebungsluft, die dem Verdichtereinlass (102) zugeführt wird, und, getrennt von der Einlassluftverdampfungskühlungseinrichtung, eine Tröpfchenzuführeinrichtung (201) zum stufenweisen Erhöhen der Netto-Leistungsabgabe der Turbine (101) durch ein Verfahren nach Anspruch 1, durch Zuführen von flüssigen Wassertröpfchen zu dem durch den Axialverdichter (103) aufgenommenen Arbeitsmedium über eine Betriebsperiode hinweg, in Form einer Mehrzahl von Massenstrominkrementen von zerstäubtem flüssigen Wasser in einer Menge, um eine vollständige Befeuchtung des Arbeitsmediums zu erreichen, und einer Maßnahme der Zwischenstufenverdampfungskühlung in einer oder mehreren Stufen des Verdichters.

22. Vorrichtung nach Anspruch 21, bei der die Tröpfchenzuführeinrichtung enthält:
eine erste Einrichtung, angeordnet im Wesentlichen neben dem Verdichtereinlass, zum Zuführen von flüssigen Wassertröpfchen daraus zu dem durch den Axialverdichter aufgenommenen Arbeitsmedium; und
eine Zusatzeinrichtung zum Zuführen flüssiger Wassertröpfchen zu dem Arbeitsmedium, wobei die Zusatzeinrichtung in einem größeren Abstand weg von dem Verdichtereinlass angeordnet ist als die erste Einrichtung.

23. Vorrichtung nach einem der Ansprüche 19 bis 22, bei der die Tröpfchenzuführeinrichtung (201) in einem ausreichenden Abstand weg von dem Verdichtereinlass (102) so positioniert ist, dass, wenn im Betriebszustand unter Last irgendein Element der Tröpfchenzugabeeinrichtung (102) von dem Rest abbrechen sollte, ein solches Element durch Gravitation zu einer tieferen Oberfläche (136) eines Lufteinlasskanals (133) gezogen wird, der an dem Turbinengehäuse (125) angebracht ist und vor dem Verdichtereinlass (102) liegt, bevor es in Kontakt mit irgendeinem Element des Verdichters selbst (103) gesogen wird.

24. Vorrichtung nach einem der Ansprüche 19 bis 23, weiter enthaltend Einrichtungen (403, 405, 407) zum Erfassen einer Deformation in dem Verdichtergehäuse (125) der Turbine, wie sie mit der Zugabe von Flüssigkeit zu dem Arbeitsmedium in Verbindung stehen können, und Strömungsüberwachungseinrichtungen, die mit der Tröpfchenzugabeeinrichtung verbunden sind, zum Einstellen des Massenstroms an dadurch zugeführten Flüssigkeitströpfchen in Abhängigkeit von einer gemessenen Deformation in dem Turbinengehäuse (125).

25. Vorrichtung nach einem der Ansprüche 19 bis 24, bei der die Gasturbine (101) weiter einen Turbinenabschnitt (107) mit einer Mehrzahl von flüssigkeitsgekühlten Rotorblättern (121) enthält und die Vorrichtung weiter eine Einrichtung zum Überwachen des Temperaturprofils eines jeden der flüssigkeitsgekühlten Rotorblätter (121) enthält.

26. Vorrichtung nach einem der Ansprüche 19 bis 25, weiter enthaltend eine Einrichtung zum Überwachen einer schädlichen Vereisung an dem Verdichtereinlass (102) und Einrichtungen (313, 315) zum Zuführen von Wärme und Feuchtigkeit zu dem Arbeitsmedium während Zeitabschnitten, in denen die Temperatur des Arbeitsmediums, enthaltend Wasser, das von der ersten und der Zusatzzuführeinrichtung für flüssige Wassertröpfchen erhalten wird, sonst auf ein Niveau abfallen würde, das eine schädliche Eisbildung in dem Verdichtereinlass (102) auftreten lassen würde.

27. Vorrichtung nach einem der Ansprüche 19 bis 26, bei dem die erste und die Zusatzeinrichtung zusammen bemessen sind, um dem Verdichtereinlass (102) ein Arbeitsmedium zuzuführen, das zumindest drei Viertel Gewichtsprozent flüssigen Wassers in einer Mischung mit vollständig befeuchteter Luft enthält.

## Revendications

1. Procédé d'augmentation de la puissance nette d'une turbine à gaz industrielle (101), la turbine à gaz (101) comprenant un compresseur à étages multiples et écoulement axial (103) comportant une entrée (102) pour l'alimentation d'un fluide moteur contenant de l'air, le procédé comprenant les étapes suivantes :
fournir (201) au fluide moteur alimentant le compresseur à écoulement axial (103), selon un mode d'addition linéaire, incrémentiel ou pouvant être autrement commandé, de gouttelettes d'un liquide qui possède une chaleur latente élevée de vaporisation, pour réduire l'élévation de température du fluide moteur provoquée par la compression (103) et pour ainsi réaliser une augmentation de la puissance nette de la turbine à gaz (101) telle que mesurée par rapport à la puissance nette de la turbine à gaz (101) dans des conditions comparables, mais sans que ledit liquide soit fourni.

2. Procédé selon la revendication 1, dans lequel le liquide fourni (201) au fluide moteur est un alcool, un mélange d'alcools, de l'eau ou un mélange d'eau et d'un ou plusieurs alcools.

3. Procédé selon l'une quelconque des revendications précédentes, dans lequel lesdites gouttelettes de liquide sont constituées d'eau.

4. Procédé selon la revendication 3, comprenant en outre l'étape consistant à amener le fluide moteur à être au moins complètement humidifié.

5. Procédé selon la revendication 3 ou la revendication 4, dans lequel les gouttelettes de liquide sont fournies (201) au fluide moteur pendant une durée dépassant celle requise pour supprimer périodiquement l'accumulation de matières particulaires sur des éléments internes.

6. Procédé selon la revendication 5, dans lequel lesdites gouttelettes de liquide sont fournies (201) pendant une durée continue d'au moins 90 minutes.

7. Procédé selon la revendication 5 ou la revendication 6, utilisé pendant au moins six heures à l'intérieur d'une période donnée de vingt-quatre heures.

8. Procédé selon l'une quelconque des revendications précédentes, dans lequel la turbine à gaz (101) a une puissance nominale d'au moins 35 mégawatts.

9. Procédé selon l'une quelconque des revendications précédentes, dans lequel les gouttelettes sont de l'eau liquide et la quantité desdites gouttelettes de liquide accroît ladite puissance nette d'au moins 10 pour cent par rapport à la puissance nette dans des conditions comparables avec de l'air complètement humidifié.

10. Procédé selon l'une quelconque des revendications précédentes, dans lequel la quantité desdites gouttelettes de liquide augmente ladite puissance nette d'au moins 20 pour cent par rapport à la puissance nette dans des conditions comparables avec de l'air complètement humidifié.

11. Procédé selon l'une quelconque des revendications précédentes, dans lequel le débit massique des gouttelettes de liquide est initialement augmenté de manière ajustable par rapport au temps pour modérer les contraintes thermiques s'exerçant au sein de la turbine à gaz (101), qui sont liées à la fourniture (201) de liquide au fluide moteur et, ensuite, un débit massique essentiellement constant est maintenu pendant le restant de la période d'augmentation.

12. Procédé selon l'une quelconque des revendications précédentes, comprenant en outre la surveillance (403, 405, 407) de la déformation angulaire de l'enveloppe (125) dudit compresseur (103) et l'ajustement de ladite fourniture de gouttelettes de liquide pour limiter ladite déformation à des tolérances prédéterminées.

13. Procédé selon l'une quelconque des revendications précédentes, dans lequel lesdites gouttelettes de liquide sont fournies (201) en majeure partie sous la forme d'un fin brouillard ayant un diamètre de gouttelette moyen de moins de 200 micromètres.

14. Procédé selon la revendication 13, dans lequel des gouttelettes d'eau liquide sont fournies (201) à l'entrée (102) sous la forme de plusieurs incréments de débit massique d'un liquide nébulisé, le débit massique total des incréments étant modifié au cours du temps pour augmenter, de manière ajustable, la quantité de liquide fournie à l'entrée (102).

15. Procédé selon l'une quelconque des revendications précédentes, comprenant en outre la fourniture (313, 315) de chaleur et d'humidité au fluide moteur pour permettre une augmentation de puissance continue pendant des périodes au cours desquelles la température du fluide moteur pourrait sinon chuter à un niveau qui permettrait une formation nuisible de glace dans l'entrée du compresseur (102).

16. Procédé selon la revendication 1, dans lequel la fourniture (313, 315) de chaleur et d'humidité au fluide moteur comprend la fourniture de vapeur au fluide moteur.

17. Procédé selon l'une quelconque des revendications précédentes, dans lequel la turbine à gaz (101) comprend en outre une section de turbine (107) comportant une pluralité d'aubes de rotor refroidies par fluide (121) et ledit procédé comprend en outre la surveillance du profil de température de chacune desdites aubes de rotor refroidies par fluide (121).

18. Procédé selon l'une quelconque des revendications précédentes, dans lequel les gouttelettes de liquide sont de l'eau et la quantité desdites gouttelettes est suffisante pour fournir à l'entrée du compresseur (102) un fluide moteur qui comprend au moins trois quarts d'un pour cent d'eau liquide en mélange avec de l'air complètement humidifié.

19. Dispositif de production d'énergie comprenant une turbine à gaz industrielle (101) comportant un compresseur à étages multiples et écoulement axial (103) ayant une entrée (102) pour l'alimentation d'un fluide moteur comprenant de l'air et un moyen d'addition de gouttelettes (201) pour augmenter par incréments, par un procédé selon la revendication 1, la puissance nette de ladite turbine (101) en fournissant les gouttelettes de liquide au fluide moteur alimentant le compresseur à écoulement axial (103) sur une certaine durée de fonctionnement, sous la forme d'une pluralité d'incréments de débit massique d'un liquide nébulisé, ledit moyen d'addition de gouttelettes (201) comprenant un premier moyen disposé essentiellement au voisinage de l'entrée du compresseur pour fournir des gouttelettes de liquide au fluide moteur alimentant le compresseur à écoulement axial et un moyen supplémentaire pour fournir des gouttelettes de liquide au fluide moteur, ledit moyen supplémentaire étant disposé à plus grande distance de l'entrée de compresseur que le premier moyen.

20. Dispositif selon la revendication 19, comprenant, distinct du moyen d'addition de gouttelettes (201), un moyen de refroidissement d'air entrant par évaporation pour refroidir l'air ambiant chargé dans l'entrée de compresseur (102).

21. Dispositif de production d'énergie comprenant une turbine à gaz industrielle (101) comprenant un compresseur à étages multiples et écoulement axial (103) comportant une entrée (102) pour l'alimentation d'un fluide moteur comprenant de l'air ; un moyen de refroidissement d'air entrant par évaporation pour refroidir l'air ambiant chargé dans l'entrée du compresseur (102) et, distinctement du moyen de refroidissement d'air entrant par évaporation, un moyen d'addition de gouttelettes (101) pour augmenter par incréments, par un procédé selon la revendication 1, la puissance nette de ladite turbine (101) en fournissant des gouttelettes d'eau liquide au fluide moteur alimentant le compresseur à écoulement axial (103) sur une certaine durée de fonctionnement, sous la forme d'une pluralité d'incréments de débit massique d'eau liquide nébulisée, en une quantité permettant d'atteindre une pleine humidification du fluide moteur et une mesure du refroidissement par évaporation inter-étages dans un ou plusieurs étages du compresseur.

22. Dispositif selon la revendication 21, dans lequel ledit moyen d'addition de gouttelettes comprend :
un premier moyen disposé essentiellement au vosinage de l'entrée du compresseur pour fournir des gouttelettes d'eau liquide au fluide moteur alimentant le compresseur à écoulement axial ;et
un moyen supplémentaire pour fournir des gouttelettes d'eau liquide au fluide moteur, ledit moyen supplémentaire étant disposé à plus grande distance de l'entrée du compresseur que le premier moyen.

23. Dispositif selon l'une quelconque des revendications 19 à 22, dans lequel le moyen d'addition de gouttelettes (201) est disposé à une distance suffisante de l'entrée du compresseur (102) pour que, si pendant le fonctionnement sous charge, un élément quelconque dudit moyen d'addition de gouttelettes (102) devait se détacher de la partie restante, cet élément serait attiré par la gravité sur une surface inférieure (136) d'une conduite d'air entrant (133) fixée à l'enveloppe de turbine (125) et précédant l'entrée du compresseur (102) avant d'être attiré en contact avec un élément quelconque du compresseur lui-même (103).

24. Dispositif selon l'une quelconque des revendications 19 à 23, comprenant en outre un moyen (403, 405, 407) pour détecter une déformation de l'enveloppe du compresseur de la turbine (125) tel qu'elle peut être associée à l'addition du liquide au fluide moteur et un moyen d'ajustement d'écoulement relié audit moyen d'addition de gouttelettes pour ajuster le débit massique de gouttelettes de liquide fournies ainsi en réponse à une déformation mesurée dans l'enveloppe de la turbine (125).

25. Dispositif selon l'une quelconque des revendications 19 à 24, dans lequel la turbine à gaz (101) comprend en outre une section de turbine (107) comportant une pluralité d'aubes de rotor refroidies par fluide (121) et ledit dispositif comprend en outre un moyen pour surveiller le profil de température de chacune desdites aubes de rotor refroidies par fluide (121).

26. Dispositif selon l'une quelconque des revendications 19 à 25, comprenant en outre un moyen pour surveiller la formation nuisible de glace au niveau de l'entrée du compresseur (102) et un moyen (313, 315) pour fournir de la chaleur et de l'humidité au fluide moteur pendant des périodes où la température du fluide moteur comprenant l'eau reçue en provenance du premier moyen et un moyen supplémentaire d'addition de gouttelettes d'eau liquide pourrait sinon chuter à un niveau qui permettrait qu'une formation nuisible de glace se produise dans l'entrée du compresseur (102).

27. Dispositif selon l'une quelconque des revendications 19 à 26, dans lequel le premier moyen et le moyen supplémentaire sont dans leur ensemble dimensionnés pour fournir un fluide moteur à l'entrée du compresseur (102) qui comprend au moins trois quarts d'un pour cent en poids d'eau liquide en mélange avec de l'air complètement humidifié.
